# EUROPEAN PATENT APPLICATION

(11) **EP 4 203 568 A1**
(43) Date of publication of application: **28.06.2023**
(21) Application number: 21871576.1
(22) Date of filing: 24.09.2021
(51) Int. Cl.: H04W 56/00

(54) **TIME SYNCHRONIZATION FAILURE PROCESSING METHOD, DEVICE AND SYSTEM**

(30) Priority: 25.09.2020 CN 202011025482
(71) Applicant: Huawei Technologies Co., Ltd., Shenzhen, Guangdong 518129 (CN)
(72) Inventor: LYU, Jingfei, Shenzhen, Guangdong 518129 (CN); YU, Fang, Shenzhen, Guangdong 518129 (CN); FAN, Boling, Shenzhen, Guangdong 518129 (CN)
(74) Representative: MERH-IP Matias Erny Reichl Hoffmann Patentanwälte PartG mbB
(86) International application number: PCT/CN2021/120154
(87) International publication number: WO 2022/063207

(57) **Abstract**

This application discloses a time synchronization fault processing method, apparatus, and system, and belongs to the communication field. The method includes: When time of a first translator in a first network is not synchronized with a clock source in the first network, the first translator stops communicating time information with at least one other translator in the first network than the first translator, where the time information is used for obtaining time synchronized with a clock source in a second network. This application avoids obtaining incorrect time.

## Description

This application claims priority to Chinese Patent Application No. 202011025482.8 on September 25, 2020 and entitled "TIME SYNCHRONIZATION FAULT PROCESSING METHOD, APPARATUS, AND SYSTEM", which is incorporated herein by reference in its entirety.

### TECHNICAL FIELD

This application relates to the communication field, and in particular, to a time synchronization fault processing method, apparatus, and system.

### BACKGROUND

Currently, a service of a time sensitive network (time sensitive network, TSN) may be carried on a 5G network. The 5G network is connected to a plurality of TSN devices, and the 5G network is required to support transfer of time of the TSN device. For example, a first TSN device is connected to a first translator in the 5G network, and a second TSN device is connected to a second translator in the 5G network. In this way, the 5G network needs to transfer, to the second TSN device, time sent by the first TSN device.

The 5G network further includes a grandmaster (grandmaster, 5G GM), both the first translator and the second translator perform time synchronization with the 5G GM, and the first TSN device performs time synchronization with a TSN clock source. The first TSN device sends a packet 1 to the first translator, where the packet 1 includes first time synchronized with the TSN clock source, and the first translator sends a packet 2 including the first time, receiving time for receiving the packet 1, and a first transmission delay to the second translator through the 5G network. The first transmission delay is a transmission delay between the first TSN device and the first translator. When the second translator needs to send a packet 3, the second translator calculates a second transmission delay based on the receiving time and current time. The second translator accumulates the first time, the first transmission delay, and the second transmission delay to obtain second time, and sends the packet 3 including the second time to the second TSN device.

In a process of implementing this application, the inventor finds that the conventional technology has at least the following problems:

A time synchronization fault may occur in a translator. As a result, time of the translator cannot be synchronized with time of the 5G GM. Consequently, second time received by a TSN device is incorrect time. For example, it is assumed that the first translator or the second translator cannot perform synchronization with the time of the 5G GM, and the second transmission delay calculated by the second translator is inaccurate. As a result, the second time accumulated by the second translator is also inaccurate, and the second TSN device receives the incorrect time.

### SUMMARY

This application provides a time synchronization fault processing method, apparatus, and system, to avoid obtaining incorrect time. The technical solutions are as follows:

According to a first aspect, this application provides a time synchronization fault processing method. In the method, when time of a first translator in a first network is not synchronized with a clock source in the first network, the first translator stops communicating time information with at least one other translator in the first network than the first translator, where the time information is used for obtaining time synchronized with a clock source in a second network.

The communication of the time information of the first translator includes: a first case, where the first translator stops receiving the time information sent by the other translators or discards the time information received from the other translators, and the time information may be used by the first translator for obtaining the time synchronized with the clock source in the second network; or a second case, where the first translator stops sending the time information to the other translators, and the time information may be used by the other translators for obtaining the time synchronized with the clock source in the second network.

In the first case, if the first translator receives the time information, the first translator obtains, based on time generated by the first translator and the received time information, the time synchronized with the clock source in the second network. Because the time of the first translator is not synchronized with the clock source in the first network, the time generated by the first translator is incorrect time. As a result, the obtained time synchronized with the time source in the second network is also incorrect time. However, in this application, when stopping receiving the time information or discarding the time information, the first translator does not generate the time synchronized with the clock source in the second network, and further, does not send the time synchronized with the clock source in the second network to a device communicating with the first translator. In this way, the device is prevented from obtaining the incorrect time, so that the device is prevented from performing synchronization based on the incorrect time, and a synchronization error is avoided.

In the second case, if the first translator sends the time information, the other translators obtain, based on time generated by the other translators and the received time information, the time synchronized with the clock source in the second network. Because the time of the first translator is not synchronized with the clock source in the first network, the time information sent by the first translator includes incorrect time. As a result, the time that is synchronized with the time source in the second network and that is obtained by the other translators is also incorrect time. However, in this application, when the first translator stops sending the time information, the other translators do not obtain the time synchronized with the clock source in the second network, and further do not send the time synchronized with the clock source in the second network to a device communicating with the other translators. In this way, the device is prevented from obtaining the incorrect time, so that the device is prevented from performing synchronization based on the incorrect time, and a synchronization error is avoided.

In a possible implementation, the first translator sends a fault identifier to a configuration device in the first network, where the fault identifier indicates that the time of the first translator is not synchronized with the clock source in the first network. In this way, the time synchronization fault may be notified to the configuration device by using the fault identifier, so that the configuration device may process the time synchronization fault. In addition, when the first translator includes a port in a slave state, the configuration device sets a status of a port on a second translator in the first network to the slave (slave) state, where the second translator is a translator in the first network other than the first translator. In this way, the second translator may send, to the other translators, the time synchronized with the clock source in the second network, so as to ensure that the device communicating with the other translators can normally perform time synchronization with the clock source in the second network.

In another possible implementation, the first translator receives a stop command sent by the configuration device based on the fault identifier. The first translator stops, according to the stop command, communicating the time information with the at least one other translator in the first network than the first translator.

In another possible implementation, the first translator disconnects a synchronization tunnel to the at least one other translator in the first network than the first translator, where the synchronization tunnel is used by the first translator for receiving or sending a first packet, and the first packet includes the time information. In this way, the communication of the time information with the other translators is stopped.

In another possible implementation, the first translator stops communicating a first packet with the at least one other translator in the first network than the first translator, where the first packet includes the time information. In this way, the communication of the time information with the other translators is stopped by using the first packet.

In another possible implementation, a packet type of the first packet includes one or more of an announcement Announce packet, a synchronization Sync packet, and a follow_up Follo _up packet.

In another possible implementation, a second packet is received, where the second packet is used by the first translator for performing time synchronization with the clock source in the first network; and whether the time of the first translator is synchronized with the clock source in the first network is determined based on the second packet. Therefore, whether the first translator is synchronized with the clock source in the first network can be determined.

In another possible implementation, the second packet includes a clock class. When the clock class is lower than a first threshold, it is determined that the time of the first translator is not synchronized with the clock source in the first network. Therefore, whether the first translator is synchronized with the clock source in the first network is determined.

In another possible implementation, the second packet includes a clock class identifier, and whether a clock class is lower than a first threshold is determined based on the clock class identifier. When the clock class is lower than the first threshold, it is determined that the time of the first translator is not synchronized with the clock source in the first network. Therefore, whether the first translator is synchronized with the clock source in the first network is determined.

In another possible implementation, the second packet is a packet that carries time information. When a time deviation that is between the first translator and the clock source in the first network and that is calculated based on the second packet exceeds a second threshold, it is determined that the time of the first translator is not synchronized with the clock source in the first network. Therefore, whether the first translator is synchronized with the clock source in the first network is determined.

In another possible implementation, when the first translator does not obtain a second packet within a timeout interval, the first translator determines that the time of the first translator is not synchronized with the clock source in the first network, where the second packet is used by the first translator for performing time synchronization with the clock source in the first network.

In another possible implementation, a resume identifier is sent to the configuration device in the first network, where the resume identifier indicates that the time of the first translator is resumed to be synchronized with the clock source in the first network, and the resume identifier is used by the configuration device for configuring a port status of a port on each translator in the first network.

In another possible implementation, the second network is a time sensitive network TSN.

In another possible implementation, the first network is a 5G network.

According to a second aspect, this application provides a time synchronization fault processing method. In the method, when time of a control device of a first translator is not synchronized with a clock source in the first network, the control device controls the first translator to stop communicating time information with at least one other translator in the first network than the first translator, where the time information is used for obtaining time synchronized with a clock source in a second network.

That the first translator is controlled to stop communicating time information includes: a first case, where the first translator is controlled to stop receiving the time information sent by the other translators or discard the time information received from the other translators, and the time information may be used by the first translator for obtaining the time synchronized with the clock source in the second network; or a second case, where the first translator is controlled to stop sending time information to the other translators, and the time information may be used by the other translators for obtaining the time synchronized with the clock source in the second network.

In the first case, if the first translator receives the time information, the first translator obtains, based on time generated by the first translator and the received time information, the time synchronized with the clock source in the second network. Because the time of the first translator is not synchronized with the clock source in the first network, the time generated by the first translator is incorrect time. As a result, the obtained time synchronized with the time source in the second network is also incorrect time. However, in this application, when the first translator is controlled to stop receiving or discard the time information, the first translator does not generate the time synchronized with the clock source in the second network, and further does not send the time synchronized with the clock source in the second network to a device communicating with the first translator. In this way, the device is prevented from obtaining the incorrect time, so that the device is prevented from performing synchronization based on the incorrect time, and a synchronization error is avoided.

In the second case, if the first translator sends the time information, the other translators obtain, based on time generated by the other translators and the received time information, the time synchronized with the clock source in the second network. Because the time of the first translator is not synchronized with the clock source in the first network, the time information sent by the first translator includes incorrect time. As a result, the time that is synchronized with the time source in the second network and that is obtained by the other translators is also incorrect time. However, in this application, when the first translator is controlled to stop sending the time information, the other translators do not obtain the time synchronized with the clock source in the second network, and further do not send the time synchronized with the clock source in the second network to a device communicating with the other translators. In this way, the device is prevented from obtaining the incorrect time, so that the device is prevented from performing synchronization based on the incorrect time, and a synchronization error is avoided.

In a possible implementation, the control device sends a fault identifier to a configuration device in the first network, where the fault identifier indicates that the time of the control device is not synchronized with the clock source in the first network. In this way, the time synchronization fault may be notified to the configuration device by using the fault identifier, so that the configuration device processes the time synchronization fault. In addition, when the first translator includes a port in a slave state, the configuration device sets a status of a port on a second translator in the first network to the slave (slave) state, where the second translator is a translator in the first network other than the first translator. In this way, the second translator may send, to the other translators, the time synchronized with the clock source in the second network, so as to ensure that the device communicating with the other translators can normally perform time synchronization with the clock source in the second network.

In another possible implementation, the control device receives a stop command sent by the configuration device based on the fault identifier. The control device controls, according to the stop command, the first translator to stop communicating the time information with the at least one other translator in the first network than the first translator.

In another possible implementation, the control device controls the first translator to disconnect a synchronization tunnel to the at least one other translator in the first network than the first translator, where the synchronization tunnel is used by the first translator for receiving or sending a first packet, and the first packet includes the time information. In this way, the first translator is controlled to stop communicating the time information with the other translators.

In another possible implementation, the control device sends a control message to the first translator, where the control message indicates the first translator to disconnect a synchronization tunnel to the at least one other translator in the first network than the first translator.

In another possible implementation, the control device controls the first translator to stop communicating a first packet with the at least one other translator in the first network than the first translator, where the first packet includes the time information. In this way, the communication of the time information with the other translators is stopped by using the first packet.

In another possible implementation, the control device sends a control message to the first translator, where the control message includes a packet type of a first packet, and the control message indicates the first translator to stop, based on the packet type, communicating the first packet with the at least one other translator in the first network than the first translator.

In another possible implementation, the control device receives a second packet, where the second packet is used by the control device for performing time synchronization with the clock source in the first network. The control device determines, based on the second packet, whether the time of the control device is synchronized with the clock source in the first network.

In another possible implementation, the packet type of the first packet includes one or more of an announcement Announce packet, a synchronization Sync packet, and a follow_up Follow_up packet.

According to a third aspect, this application provides a time synchronization fault processing method. In the method, a configuration device receives a fault identifier, where the fault identifier indicates that time of a first translator in a first network is not synchronized with a clock source in the first network, or indicates that time of a control device of the first translator is not synchronized with the clock source in the first network. The configuration device sends a stop command based on the fault identifier, where the stop command indicates the first translator to stop communicating time information with at least one other translator in the first network than the first translator, and the time information is used for obtaining time synchronized with a clock source in a second network.

That the stop command indicates the first translator to stop communicating time information includes: a first case, where the first translator is indicated to stop receiving the time information sent by the other translators or discard the time information received from the other translators, and the time information may be used by the first translator for obtaining the time synchronized with the clock source in the second network; or a second case, where the first translator is indicated to stop sending the time information to the other translators, and the time information may be used by the other translators for obtaining the time synchronized with the clock source in the second network.

In the first case, if the first translator receives or discards the time information, the first translator does not obtain, based on time generated by the first translator and the received time information, the time synchronized with the clock source in the second network. Because the time of the first translator is not synchronized with the clock source in the first network, the time generated by the first translator is incorrect time. As a result, the obtained time synchronized with the time source in the second network is also incorrect time. However, in this application, when the first translator is indicated, by using the stop command, to stop receiving or discard the time information, the first translator does not generate the time synchronized with the clock source in the second network, and further does not send the time synchronized with the clock source in the second network to a device communicating with the first translator. In this way, the device is prevented from obtaining the incorrect time, so that the device is prevented from performing synchronization based on the incorrect time, and a synchronization error is avoided.

In the second case, if the first translator sends the time information, the other translators obtain, based on time generated by the other translators and the received time information, the time synchronized with the clock source in the second network. Because the time of the first translator is not synchronized with the clock source in the first network, the time information sent by the first translator includes incorrect time. As a result, the time that is synchronized with the time source in the second network and that is obtained by the other translators is also incorrect time. However, in this application, when the first translator is indicated, by using the stop command, to stop sending the time information, the other translators do not obtain the time synchronized with the clock source in the second network, and further do not send the time synchronized with the clock source in the second network to a device communicating with the other translators. In this way, the device is prevented from obtaining the incorrect time, so that the device is prevented from performing synchronization based on the incorrect time, and a synchronization error is avoided.

In another possible implementation, when detecting that the first translator includes a port in a slave state, the configuration device sets a status of a port on a second translator in the first network to the slave (slave) state, where the second translator is a translator in the first network other than the first translator. In this way, the second translator may send, to the other translators, the time synchronized with the clock source in the second network, so as to ensure that the device communicating with the other translators can normally perform time synchronization with the clock source in the second network.

In another possible implementation, a resume identifier is received, where the resume identifier indicates that the time of the first translator is resumed to be synchronized with the clock source in the first network, or indicates that the time of the control device of the first translator is resumed to be synchronized with the clock source in the first network; and a port status of a port on each translator in the first network is configured based on the resume identifier.

According to a fourth aspect, this application provides a time synchronization fault processing apparatus, configured to perform the method according to any one of the first aspect or the possible implementations of the first aspect. Specifically, the apparatus includes units configured to perform the method according to any one of the first aspect or the possible implementations of the first aspect.

According to a fifth aspect, this application provides a time synchronization fault processing apparatus, configured to perform the method according to any one of the second aspect or the possible implementations of the second aspect. Specifically, the apparatus includes units configured to perform the method according to any one of the second aspect or the possible implementations of the second aspect.

According to a sixth aspect, this application provides a time synchronization fault processing apparatus, configured to perform the method according to any one of the third aspect or the possible implementations of the third aspect. Specifically, the apparatus includes units configured to perform the method according to any one of the third aspect or the possible implementations of the third aspect.

According to a seventh aspect, this application provides a time synchronization fault processing apparatus. The apparatus includes a transceiver, a processor, and a memory. The transceiver, the processor, and the memory may be connected through an internal connection. The memory is configured to store a program, instructions, or code. The processor is configured to execute the program, the instructions, or the code in the memory and cooperate with the transceiver, so that the apparatus completes the method according to any one of the first aspect or the possible implementations of the first aspect.

According to an eighth aspect, this application provides a time synchronization fault processing apparatus. The apparatus includes a transceiver, a processor, and a memory. The transceiver, the processor, and the memory may be connected through an internal connection. The memory is configured to store a program, instructions, or code. The processor is configured to execute the program, the instructions, or the code in the memory and cooperate with the transceiver, so that the apparatus completes the method according to any one of the second aspect or the possible implementations of the second aspect.

According to a ninth aspect, this application provides a time synchronization fault processing apparatus. The apparatus includes a transceiver, a processor, and a memory. The transceiver, the processor, and the memory may be connected through an internal connection. The memory is configured to store a program, instructions, or code. The processor is configured to execute the program, the instructions, or the code in the memory and cooperate with the transceiver, so that the apparatus completes the method according to any one of the third aspect or the possible implementations of the third aspect.

According to a tenth aspect, this application provides a computer program product. The computer program product includes a computer program stored in a computer-readable storage medium, and the computer program is loaded by using a processor to implement the method according to any one of the first aspect, the second aspect, the third aspect, the possible implementations of the first aspect, the possible implementations of the second aspect, or the possible implementations of the third aspect.

According to an eleventh aspect, this application provides a computer-readable storage medium, configured to store a computer program. The computer program is loaded by using a processor to execute instructions of the method according to any one of the first aspect, the second aspect, the third aspect, the possible implementations of the first aspect, the possible implementations of the second aspect, or the possible implementations of the third aspect.

According to a twelfth aspect, this application provides a time synchronization fault processing system. The system includes the apparatus according to the fourth aspect and the apparatus according to the sixth aspect; or the system includes the apparatus according to the fifth aspect and the apparatus according to the sixth aspect; or the system includes the apparatus according to the seventh aspect and the apparatus according to the ninth aspect; or the system includes the apparatus according to the eighth aspect and the apparatus according to the ninth aspect.

### BRIEF DESCRIPTION OF DRAWINGS

FIG. 1 is a schematic diagram of a network architecture according to an embodiment of this application;
FIG. 2 is a schematic diagram of another network architecture according to an embodiment of this application;
FIG. 3 is a schematic diagram of another network architecture according to an embodiment of this application;
FIG. 4 is a flowchart of a synchronization method according to an embodiment of this application;
FIG. 5 is a flowchart of another synchronization method according to an embodiment of this application;
FIG. 6 is a flowchart of another synchronization method according to an embodiment of this application;
FIG. 7 is a schematic diagram of another network architecture according to an embodiment of this application;
FIG. 8 is a flowchart of a time synchronization fault processing method according to an embodiment of this application;
FIG. 9 is a flowchart of another time synchronization fault processing method according to an embodiment of this application;
FIG. 10 is a schematic diagram of a structure of a time synchronization fault processing apparatus according to an embodiment of this application;
FIG. 11 is a schematic diagram of a structure of another time synchronization fault processing apparatus according to an embodiment of this application;
FIG. 12 is a schematic diagram of a structure of another time synchronization fault processing apparatus according to an embodiment of this application;
FIG. 13 is a schematic diagram of a structure of another time synchronization fault processing apparatus according to an embodiment of this application;
FIG. 14 is a schematic diagram of a structure of another time synchronization fault processing apparatus according to an embodiment of this application;
FIG. 15 is a schematic diagram of a structure of another time synchronization fault processing apparatus according to an embodiment of this application;
FIG. 16 is a schematic diagram of a structure of a time synchronization fault processing system according to an embodiment of this application; and
FIG. 17 is a schematic diagram of a structure of another time synchronization fault processing system according to an embodiment of this application.

### DESCRIPTION OF EMBODIMENTS

The following further describes in detail embodiments of this application with reference to accompanying drawings.

In embodiments of this application, terms including a port of a translator, a port dataset of a translator, a port status of a translator, an optimal dataset, a port number of a translator, and a clock class are all applicable to the precision time protocol (precision time protocol, PTP) (IEEE 1588 protocol and a corresponding 1588 profile, for example, IEEE 802.1AS).

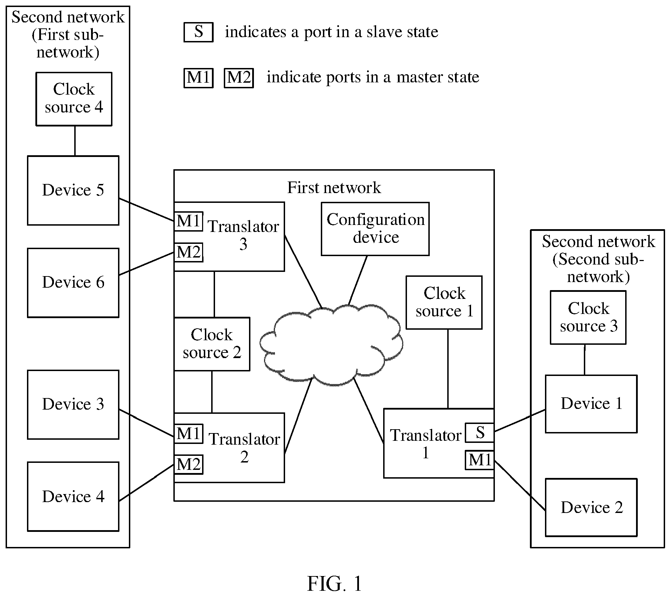

Refer to FIG. 1. An embodiment of this application provides a network architecture. The network architecture includes a first network and a second network.

The first network includes a plurality of translators and at least one clock source. For each translator in the first network, a network connection is established between the translator and one clock source in the first network, and the translator performs time synchronization with the clock source. When the first network includes a plurality of clock sources, time of the plurality of clock sources in the first network is also synchronized.

The second network includes a plurality of devices and at least one clock source, and each device in the second network may communicate with one translator in the first network. A network connection may be established between each of the at least one clock source and one or more devices in the second network.

One of the at least one clock source in the second network is a master clock source in the second network, and the other clock sources are slave clock sources. To be specific, when the second network includes a plurality of clock sources, one of the plurality of clock sources is a master clock source, and the other clock sources are slave clock sources. A clock class of the master clock source is higher than or equal to a clock class of the slave clock source. When the second network includes one clock source, the clock source is a master clock source.

A network connection is established between one device in the second network and the master clock source in the second network. For the device having the established network connection to the master clock source in the second network, the device may perform time synchronization with the master clock source in the second network, or may not perform time synchronization with the master clock source in the second network. The device may send time synchronized with the master clock source in the second network to another device in the second network through the translator in the first network. For any other device, when a network connection is established between the device and one clock source in the second network, the device may perform time synchronization with the master clock source in the second network based on the time; or the device may not perform time synchronization with the master clock source in the second network based on the time, but perform time synchronization with the clock source.

Optionally, an implementation in which the device in the second network communicates with the translator in the first network includes: A network connection is established between the device and the translator, or the device is directly connected to the translator. The network connection may be a wireless connection, a wired connection, or the like.

For example, the first network includes a translator 1, a translator 2, a translator 3, a clock source 1, and a clock source 2, and time of the clock source 1 and time of the clock source 2 is synchronized. A network connection is established between the translator 1 and the clock source 1, and the translator 1 performs time synchronization with the clock source 1. A network connection is established between the translator 2 and the clock source 2, and a network connection is also established between the translator 3 and the clock source 2. Both the translator 2 and the translator 3 perform time synchronization with the clock source 2. Therefore, time of the translator 1, time of the translator 2, and time of the translator 3 are synchronized.

The second network includes a device 1, a device 2, a device 3, a device 4, a device 5, a device 6, a clock source 3, and a clock source 4. The clock source 3 is a master clock source in the second network (located in a second sub-network of the second network), and the clock source 4 is a slave clock source in the second network (located in a first sub-network of the second network). The device 1 and the device 2 in the second network communicate with the translator 1, the device 3 and the device 4 in the second network communicate with the translator 2, and the device 5 and the device 6 in the second network communicate with the translator 3. A network connection is established between the device 1 and the master clock source 3. A network connection is established between the device 5 and the slave clock source 4.

A network connection may be established between the translator 1 and the translator 2, and a network connection may be established between the translator 1 and the translator 3. The device 1 may send time synchronized with the master clock source 3 in the second network to the device 2 through the translator 1; may send the time synchronized with the master clock source 3 in the second network to the device 3 and the device 4 through the translator 1 and the translator 2; and may send the time synchronized with the master clock source 3 in the second network to the device 5 and the device 6 through the translator 1 and the translator 3. The device 2, the device 3, the device 4, the device 5, and the device 6 may all perform time synchronization with the master clock source 3 in the second network based on the time. Alternatively, the device 5 does not perform time synchronization with the master clock source 3 in the second network based on the time, but performs time synchronization with the slave clock source 4 in the second network.

For each translator in the first network, the translator includes at least one port, and the at least one port is a PTP port.

Optionally, an implementation in which the device in the second network communicates with the translator in the first network includes: A network connection is established between the device and a port on the translator, or the device is connected to the port on the translator.

One translator in the first network includes a port in a slave (Slave) state, and another port on the translator may be a port in a master (Master) state. A port on another translator in the first network may also be a port in the master state. A device having an established network connection to the master clock source in the second network communicates with the port in the slave state on the translator.

The port in the slave state may be configured to receive the time synchronized with the master clock source in the second network. The port in the master state may be configured to send the time synchronized with the master clock source in the second network. Therefore, for one device having an established network connection to the master clock source in the second network, the device may send the time synchronized with the master clock source in the second network to another device in the second network through the translator in the first network.

For example, refer to FIG. 1. Only the translator 1 in the first network includes a port in the slave state, and another port on the translator 1 is a port in the master state. Ports on the translator 2 and the translator 3 in the first network are also ports in the master state. The device 1 having the established network connection to the master clock source 3 in the second network sends the time synchronized with the master clock source 3 in the second network to the device 2, the device 3, the device 4, the device 5, and the device 6 in the second network through the translator 1, the translator 2, and the translator 3 in the first network.

Optionally, the first network is a 4G network, a 5G network, or the like. The second network may be a TSN network, an electric power network, or the like, and the device in the second network may be a TSN device or an electric power device.

Optionally, the second network includes the first sub-network and the second sub-network. The first network is connected to the first sub-network and the second sub-network, the master clock source in the second network is located in the second sub-network, and the device having the established network connection to the master clock source in the second network is also located in the second sub-network.

Optionally, the clock source in the first network is a 5G GM. For any translator in the first network, the translator is a network-side time sensitive network translator (network-side time sensitive network translator, NW-TT) or a terminal-side time sensitive network translator (device-side time sensitive network translator, DS-TT).

Optionally, the clock source in the second network is a TSN GM. The device in the second network is an end station (end station), a TSN bridge (TSN bridge), or the like.

Optionally, in the second network, one or more devices may be connected, via the TSN bridge, to the translator in the first network. The TSN bridge may be configured to forward a packet sent by the translator to the one or more devices, or forward a packet sent by the one or more devices to the translator.

Optionally, any translator in the first network may be an independent device or a dedicated device, or is a module integrated into a device. When the translator is a module integrated into a device, "the translator includes at least one port" means that the device in which the translator is located includes at least one port.

Optionally, the first network further includes devices such as user equipment (user equipment, UE) and a user plane function (user plane function, UPF).

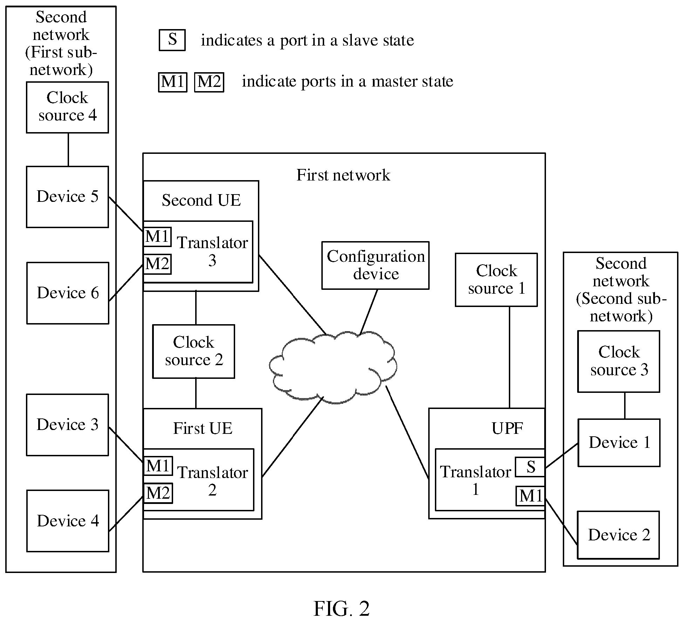

Optionally, refer to FIG. 2. One or more translators may be integrated into the UE, and/or one or more translators may be integrated into the UPF. For example, in FIG. 2, a translator 1 is integrated into the UPF, a translator 2 is integrated into first UE, and a translator 3 is integrated into second UE. Alternatively:

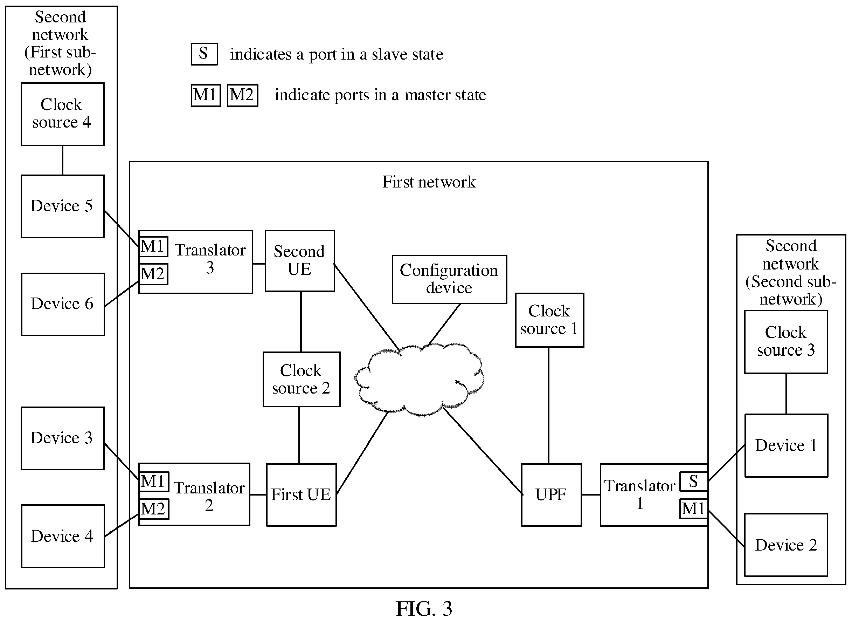

Optionally, refer to FIG. 3. The UE may communicate with one or more translators, and/or the UPF may communicate with one or more translators. For example, in FIG. 3, a translator 1 communicates with the UPF, a translator 2 communicates with first UE, and a translator 3 communicates with second UE.

Optionally, refer to FIG. 2. The translator integrated into the UPF may be an NW-TT, and the translator integrated into the UE may be a DS-TT. Alternatively, refer to FIG. 3. The translator communicating with the UPF may be an NW-TT, and the translator communicating with the UE may be a DS-TT.

Optionally, refer to FIG. 1 to FIG. 3. The first network further includes a configuration device, and the configuration device may be configured to manage the translator in the first network.

Optionally, the configuration device is an independent device, or is integrated into a translator in the first network (not shown in the figure), or is located in a same device (not shown in the figure) as one or more translators in the first network. When the first network is a 5G network, the configuration device may be a 5g-gPTP device.

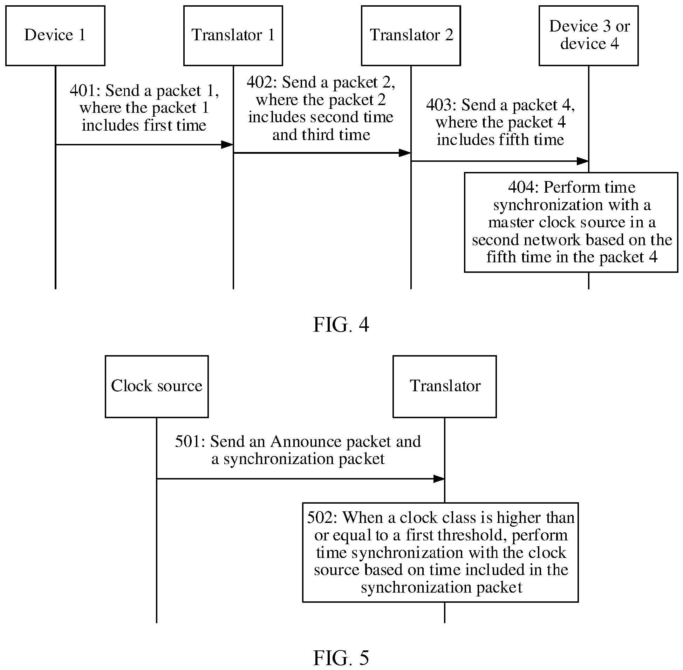

In the network architecture shown in FIG. 1, the network connection is established between the device 1 in the second network and the master clock source 3 in the second network. The device 1 sends time synchronized with the master clock source 3, so that another device in the second network performs time synchronization with the master clock source 3. Refer to FIG. 4. The synchronization process may be as follows:

Step 401: The device 1 sends a packet 1 to the translator 1, where the packet 1 includes first time, and the first time is synchronized with time of the master clock source 3 in the second network.

A type of the packet 1 includes a synchronization (Sync) packet, a follow-up (Follow_up) packet, or the like.

Time synchronized with the master clock source 3 means that the time is the same as the time of the master clock source 3, or a time difference between the time and the time of the master clock source 3 is less than a difference threshold. For example, the time synchronization between the first time and the master clock source 3 means that when the device 1 needs to send the packet 1, current time of the master clock source 3 is equal to the first time, in other words, the first time is the same as the current time of the master clock source 3, or a time difference between the first time and the current time of the master clock source 3 is less than the difference threshold.

The device 1 may obtain the first time in the following two manners.

In a first manner, the device 1 obtains the first time from a local clock.

In the first manner, the local clock of the device 1 is synchronized with the master clock source 3 in the second network. The device 1 obtains current time generated by the local clock of the device 1 as the first time, and sends the packet 1 including the first time. Because the local clock of the device 1 is synchronized with the master clock source 3, the first time is synchronized with the current time of the master clock source 3.

In a second manner, the device 1 receives time sent by the master clock source 3, and obtains the first time based on the time.

In the second manner, the device 1 receives a time packet that includes the time of the master clock source 3 and that is sent by the master clock source 3 in the second network, and the device 1 calculates a transmission delay of transmitting the time packet from the master clock source 3 to the device 1. When needing to send the packet 1, the device 1 calculates a time difference between receiving time of receiving the time packet and the current time, accumulates the time included in the time packet, the transmission delay, and the time difference to obtain the first time, where the first time is synchronized with the current time of the master clock source 3, and sends the packet 1 including the first time.

In step 401, the device 1 periodically sends an Announce packet 1 to the translator 1, where the Announce packet 1 includes a clock class of the master clock source 3.

Step 402: The translator 1 receives the packet 1, and sends a packet 2 to another translator in the first network, where the packet 2 includes second time and third time, the second time is time synchronized with the master clock source 3 in the second network when the translator 1 receives the packet 1, and the third time is time of the translator 1 when the translator 1 receives the packet 1.

The translator 1 receives the packet 1 through the port in the slave state, obtains a first transmission delay when receiving the packet 1, where the first transmission delay is a delay of transmitting the packet 1 from the device 1 to the translator 1, and accumulates the first transmission delay and the first time to obtain the second time. The second time is the same as current time of the master clock source 3 in the second network when the translator 1 receives the packet 1, or a time difference between the second time and the current time of the master clock source 3 in the second network is less than the difference threshold.

A local clock of the translator 1 performs time synchronization with the clock source 1 in the first network. When receiving the packet 1, the translator 1 obtains current time generated by the local clock of the translator 1 as the third time.

A type of the packet 2 is the same as the type of the packet 1, to be specific, the type of the packet 2 includes a Sync packet, a Follow_up packet, or the like.

Optionally, the translator 1 may further include a port in the master state. The port in the master state may communicate with another device different from the device 1 in the second network. The translator 1 further sends a packet 3 to the another device. The packet 3 includes fourth time. The fourth time is time synchronized with the master clock source 3 in the second network when the translator 1 needs to send the packet 3.

A process of sending the packet 3 may be as follows: When the translator 1 needs to send the packet 3 to the another device, the translator 1 obtains current time of the local clock of the translator 1, calculates a forwarding delay of the translator 1 based on the current time and the third time, and accumulates the forwarding delay and the second time, to obtain the fourth time synchronized with the master clock source 3. The translator 1 further sends the packet 3 to the another device through the port in the master state, where the packet 3 includes the fourth time.

The another device receives the packet 3. When the another device is a TSN bridge, the TSN bridge sends the packet 3 to a device connected to the TSN bridge, and the device connected to the TSN performs time synchronization with the master clock source 3 in the second network based on the fourth time in the packet 3. When the another device is a TSN end station, the another device performs time synchronization with the master clock source 3 in the second network based on the fourth time in the packet 3.

It should be noted that a destination address of the packet 2 sent by the translator 1 to the another translator is an address of the another translator. A source port number of the packet 3 sent by the translator 1 to the another device through the port in the master state is a port number of the port in the master state, and a source address is an address of the port in the master state.

For example, refer to FIG. 1 to FIG. 3. The translator 1 sends the packet 2 to the translator 2, and sends the packet 2 to the translator 3. The translator 1 includes a port 1 (M1 in the figure) in the master state. The port 1 in the master state may communicate with the device 2 in the second network. When sending the packet 3 to the device 2, the translator 1 obtains current time generated by the local clock of the translator 1, calculates a forwarding delay of the translator 1 based on the current time and the third time, accumulates the forwarding delay and the second time to obtain the fourth time synchronized with the master clock source 3, and sends the packet 3 to the device 2 through the port 1 in the master state, where the packet 3 includes the fourth time. The device 2 receives the packet 3, and may perform time synchronization with the master clock source 3 in the second network based on the fourth time included in the packet 3. A destination address of the packet 2 sent by the translator 1 to the translator 2 is an address of the translator 2. A destination address of the packet 2 sent to the translator 3 is an address of the translator 3. A source port number of the packet 3 sent to the device 2 is a port number of the port 1 in the master state, and a source address is an address of the port 1 in the master state.

Optionally, when receiving the packet 1, the translator 1 may not accumulate the first time and the first transmission delay, but includes the first time, the first transmission delay, and the third time in the to-be-sent packet 2, and includes the first time, the first transmission delay, and the forwarding delay in the to-be-sent packet 3. The device 2 receives the packet 3, and accumulates the first time, the first transmission delay, and the forwarding delay in the packet 3 to obtain the fourth time synchronized with the master clock source 3.

In step 402, the translator 1 further receives the Announce packet 1, and sends an Announce packet 2 to another translator in the first network, where the Announce packet 2 includes the clock class of the master clock source 3, and a destination address of the Announce packet 2 is an address of the another translator. In addition, the translator 1 sends an Announcer packet 3 to another device (a device other than the device 1) that communicates with the translator 1 in the second network, where the Announce packet 3 includes the clock class of the master clock source 3, and a destination address of the Announce packet 2 is an address of the another device.

For example, refer to FIG. 1 to FIG. 3. The translator 1 further receives the Announce packet 1, sends the Announce packet 2 to the translator 2, and sends the Announce packet 2 to the translator 3, where the Announce packet 2 includes the clock class of the master clock source 3. A destination address of the Announce packet 2 sent by the translator 1 to the translator 2 is the destination address of the translator 2, and a destination address of the Announce packet 2 sent by the translator 3 is the address of the translator 3. The translator 1 sends the Announce packet 3 to the device 2 through the port 1, in the master state, included in the translator 1, where the Announce packet 3 includes the clock class of the master clock source 3, a source port number of the Announce packet 3 is the port 1 in the master state, and a destination address is an address of the device 2.

For the device 2, the device 2 receives the Announce packet 3. When a clock class included in the Announce packet 3 is not the clock class of the master clock source 3, the device 2 may reject receiving of a packet (for example, reject the packet 3) from the translator 1. Alternatively, if the device 2 does not receive, within a timeout interval, the Announce packet 3 including the clock class of the master clock source 3, the device 2 may also reject receiving of the packet from the translator 1.

Optionally, that the device 2 does not receive the Announce packet 3 within a timeout interval means that a length of duration in which the device 2 does not receive the Announce packet 3 exceeds a length of the timeout interval. The device 3 is at an end moment of the timeout interval may mean that a length of duration in which the device 3 does not receive the Announce packet 3 reaches the length of the timeout interval. Meaning of the timeout interval in the following content is not described one by one again. However, lengths of timeout intervals in different parts in this application may be the same or different.

Step 403: The translator 2 receives the packet 2, and sends a packet 4 to a device communicating with the translator 2, where the packet 4 includes fifth time, the fifth time is time synchronized with the master clock source 3 in the second network when the translator 2 sends the packet 4, and the translator 2 is a translator in the second network other than the translator 1.

In this step, a local clock of the translator 2 performs time synchronization with the clock source 2 in the first network. After receiving the packet 2, when needing to send the packet 4 to the device communicating with the translator 2, the translator 2 obtains current time generated by the local clock of the translator 2 as sixth time. The packet 2 includes the second time and the third time. A second transmission delay is calculated based on the third time and the sixth time, where the second transmission delay is a time difference between time at which the translator 1 receives the packet 2 and the current time. The second transmission delay and the second time are accumulated to obtain the fifth time currently synchronized with the master clock source 3 in the second network. The translator 2 includes the port in the master state, and the translator 2 sends, through the port in the master state, the packet 4 including the fifth time to the device communicating with the translator 2.

For example, refer to FIG. 1 to FIG. 3. The translator 2 includes a port 1 (M1 in the figure) in the master state and a port 2 (M2 in the figure) in the master state. The translator 2 sends, through the port 1 in the master state, the packet 4 to a device 3 communicating with the translator 2, and sends, through the port 2 in the master state, the packet 4 to a device 4 communicating with the translator 2. The device 3 receives the packet 4, and performs time synchronization with the master clock source 3 in the second network based on the fifth time in the packet 4, and the device 4 performs an operation similar to that of the device 3. A source port number of the packet 4 sent to the device 3 is a port number of the port 1 in the master state, and a source address is an address of the port 1 in the master state. A source port number of the packet 4 sent to the device 4 is a port number of the port 2 in the master state, and a source address is an address of the port 2 in the master state.

Optionally, if the packet 2 includes the first time, the third time, and the first transmission delay, when the translator 2 needs to send the packet 4, the translator 2 obtains the current time generated by the local clock of the translator 2 as the sixth time. The second transmission delay is calculated based on the third time and the sixth time. The translator 2 sends, through the port in the master state, the packet 4 to the device communicating with the translator 2, where the packet 4 includes the first time, the first transmission delay, and the second transmission delay. The device receives the packet 4, accumulates the first time, the first transmission delay, and the second transmission delay in the packet 4 to obtain the fifth time, and performs time synchronization with the master clock source 3 in the second network based on the fifth time.

It should be noted that the clock source 1 and the clock source 2 in the first network may be a same device, or may be different devices. When the clock source 1 and the clock source 2 in the first network are different devices, time of the clock source 1 and time of the clock source 2 are usually synchronized. Because the local clock of the translator 1 is synchronized with the clock source 1 in the first network, and the local clock of the translator 2 is synchronized with the clock source 2 in the first network, the third time obtained by the translator 1 and the sixth time obtained by the translator 2 both refer to the same clock source. The second transmission delay calculated based on the third time and the sixth time is a time difference between the time at which the translator 1 receives the packet 2 and the current time at which the translator 2 needs to send the packet 4, and precision of the second transmission delay is high. Therefore, the second transmission delay and the second time are accumulated to obtain the fifth time, where the fifth time is time synchronized with the master clock source 3 in the second network when the translator 2 sends the packet 4; to be specific, when the translator 2 sends the packet 4, the fifth time is the same as current time of the master clock source 3 in the second network, or a time difference between the fifth time and the current time of the master clock source 3 in the second network is less than the difference threshold.

For a translator in the first network other than the translator 1 and the translator 2, the translator also performs the same operation as that performed by the translator 2.

For example, refer to FIG. 1 to FIG. 3. For the translator 3 in the first network, the translator 3 receives the packet 2, and sends a packet 5 to a device communicating with the translator 3, where the packet 5 includes seventh time, and the seventh time is time synchronized with the master clock source 3 in the second network when the translator 3 needs to send the packet 5. During implementation:

A local clock of the translator 3 performs time synchronization with the clock source 2 in the first network. When the translator 3 needs to send the packet 5, the translator 3 obtains current time generated by the local clock of the translator 3 as eighth time. The packet 2 includes the second time and the third time. A third transmission delay is calculated based on the third time and the eighth time, where the third transmission delay is a time difference between the time at which the translator 1 receives the packet 2 and the current time at which the translator 3 needs to send the packet 5. The third transmission delay and the second time are accumulated to obtain the seventh time.

The translator 3 includes a port 1 (M1 in the figure) in the master state and a port 2 (M2 in the figure) in the master state. The translator 3 sends, through the port 1 in the master state, the packet 5 to a device 5 communicating with the translator 3, and sends, through the port 2 in the master state, the packet 5 to a device 6 communicating with the translator 3. A source port number of the packet 5 sent to the device 5 is a port number of the port 1 in the master state, and a source address is an address of the port 1 in the master state. A source port number of the packet 5 sent to the device 6 is a port number of the port 2 in the master state, and a source address is an address of the port 2 in the master state.

It should be noted that a type of the packet 3, a type of the packet 4, and a type of the packet 5 are all the same as the type of the packet 2, in other words, the type of the packet 3, the type of the packet 4, and the type of the packet 5 include a Sync packet, a Follow_up packet, or the like.

In step 403, the translator 2 further receives the Announce packet 2, and sends an Announce packet 4 to the device communicating with the translator 2 in the second network, where the Announce packet 4 includes the clock class of the master clock source 3.

For example, refer to FIG. 1 to FIG. 3. The translator 2 receives the Announce packet 2, the translator 2 sends, through the port 1 in the master state, the Announce packet 4 to the device 3 communicating with the translator 2, and sends, through the port 2 in the master state, the Announce packet 4 to the device 4 communicating with the translator 2, where the Announce packet 4 includes the clock class of the master clock source 3. A source port number of the Announce packet 4 sent to the device 3 is a port number of the port 1 in the master state, and a source address is an address of the port 1 in the master state. A source port number of the Announce packet 4 sent to the device 4 is a port number of the port 2 in the master state, and a source address is an address of the port 2 in the master state.

For another example, the translator 3 receives the Announce packet 2, sends, through the port 1 in the master state, an Announce packet 5 to the device 5 communicating with the translator 3, and sends, through the port 2 in the master state, the Announce packet 5 to the device 6 communicating with the translator 3. A source port number of the Announce packet 5 sent to the device 5 is a port number of the port 1 in the master state, and a source address is an address of the port 1 in the master state. A source port number of the Announce packet 5 sent to the device 6 is a port number of the port 2 in the master state, and a source address is an address of the port 2 in the master state.

Step 404: The device communicating with the translator 2 receives the packet 4, and performs time synchronization with the master clock source in the second network based on the fifth time in the packet 4.

Optionally, the device communicating with the translator 2 is an end station. The device may be directly connected to the translator 2, and the device receives the packet 4 sent by the translator 2. Alternatively, the device may communicate with the translator 2 via a TSN bridge, and the device receives the packet 4 that is from the translator 2 and that is forwarded by the TSN bridge.

For example, refer to FIG. 1 to FIG. 3. The device 3 receives the packet 4, and performs time synchronization with the master clock source 3 in the second network based on the fifth time in the packet 4. In addition, the device 4 receives the packet 4, and performs time synchronization with the master clock source 3 in the second network based on the fifth time in the packet 4.

Similarly, for a translator in the first network other than the translator 1 and the translator 2, a device communicating with the translator also performs time synchronization with the master clock source in the second network in the same way as the device 3 and the device 4. For example, refer to FIG. 1 to FIG. 3. For the device 5 and the device 6 that communicate with the translator 3, the device 5 receives the packet 5, and performs time synchronization with the master clock source 3 in the second network based on the seventh time in the packet 5; and the device 6 receives the packet 5, and performs time synchronization with the master clock source 3 in the second network based on the seventh time in the packet 5.

It should be noted that, for the device 5 having an established network connection to the slave clock source 4 in the second network, the device 5 may not perform time synchronization with the master clock source 3 in the second network, but perform time synchronization with the slave clock source 4.

It should be further noted that, for any one of the device 3, the device 4, the device 5, and the device 6, if the device is a TSN bridge, when receiving a packet (the packet 4 or the packet 5), the TSN bridge sends the packet to a device that is in the second network and that is connected to the TSN bridge.

The device communicating with the translator 2 further receives the Announce packet 4. When a clock class included in the Announce packet 4 is not the clock class of the master clock source 3, the device may reject receiving of a packet (for example, reject the packet 4) from the translator 2. Alternatively, if the device does not receive, within a timeout interval, the Announce packet 4 including the clock class of the master clock source 3, the device may also reject receiving of a packet from the translator 2.

It should be noted that both time of the translator 1 and time of the translator 2 need to be synchronized with the clock source in the first network. In this way, it can be ensured that the translator 2 accurately calculates the second transmission delay, and further accurately calculates the fifth time, so that the device connected to the translator 2 obtains the correct fifth time, so as to perform time synchronization with the master clock source 3 in the second network based on the fifth time without any time step error.

Therefore, for each translator in the first network, the translator needs to perform time synchronization with the clock source in the first network. A network connection is established between the translator and the clock source in the first network, and between the translator and the clock source, the network connection may pass through at least one network device, or may not pass through any network device.

Optionally, refer to FIG. 5. When the network connection does not pass through any network device, a process in which the translator performs time synchronization with the clock source in the first network may be as follows:

Step 501: The clock source in the first network sends an Announce packet and a synchronization packet to the translator through the network connection, where the Announce packet includes clock class information of the clock source, and the synchronization packet includes time of the clock source.

Optionally, the clock class information may be a clock class of the clock source or a clock class identifier indicating the clock class.

Optionally, the clock class identifier indicates whether the clock class is lower than a first threshold, and one bit may indicate whether the clock class is lower than the first threshold. The bit is the clock class identifier. For example, a bit 1 may indicate that the clock class is lower than the first threshold, and a bit 0 may indicate that the clock class is not lower than the first threshold.

Optionally, a type of the synchronization packet includes a Sync packet, a Follow_up packet, a delay request (delay_request, Delay_Req) packet, a delay response (delay_response, Delay_Resp) packet, a peer delay request (peer delay_request, Pdelay_Req) packet, a peer delay response (peer delay_response, Pdelay_Resp) packet, or a peer delay response follow_up (peer delay_response follow_up, Pdelay_Resp_Follow_up) packet.

Optionally, if the clock class of the clock source is higher than or equal to the first threshold, it indicates that the clock source is normal. If the clock class of the clock source is lower than the first threshold, it indicates that the clock source is abnormal.

For example, it is assumed that the first threshold is 6. When a larger value of the clock class indicates a higher clock class, if the clock class of the clock source is class 6 or is greater than class 6, it indicates that the clock class of the clock source is higher than or equal to the first threshold, and it indicates that a status of the clock source is normal. If the clock class of the clock source is lower than class 6, it indicates that the clock class of the clock source is lower than the first threshold, and it indicates that the status of the clock source is abnormal.

When a smaller value of the clock class indicates a higher clock class, if the clock class of the clock source is class 6 or is lower than class 6, it indicates that the clock class of the clock source is equal to or higher than the first threshold, and it indicates that the status of the clock source is normal. If the clock class of the clock source is higher than class 6, it indicates that the clock class of the clock source is lower than the first threshold, and it indicates that the status of the clock source is abnormal.

Optionally, when the clock source is faulty, the clock class included in the Announce packet sent by the clock source may be lower than the first threshold.

For example, refer to FIG. 1 to FIG. 3. For the translator 1 in the first network, a clock source having an established network connection to the translator 1 is the clock source 1 in the first network. The clock source 1 sends an Announce packet and/or a synchronization packet to the translator 1, where the Announce packet includes clock class information of the clock source 1, and the synchronization packet includes time of the clock source 1.

Step 502: The translator receives the Announce packet and the synchronization packet, determines the clock class based on the clock class information in the Announce packet, and performs, when the clock class is higher than or equal to the first threshold, time synchronization with the clock source based on the time included in the synchronization packet.

Optionally, when the clock class information is the clock class, the operation of determining the clock class is reading the clock class from the Announce packet. If the clock class information is the clock class identifier, whether the clock class is lower than the first threshold is directly determined based on the clock class identifier.

Optionally, when the clock class is lower than the first threshold, the translator does not perform time synchronization with the time source.

For example, refer to FIG. 1 to FIG. 3. The translator 1 receives the Announce packet and the synchronization packet, and performs, when the clock class determined based on the clock class information in the Announce packet is higher than or equal to the first threshold, time synchronization with the clock source based on the time included in the synchronization packet.

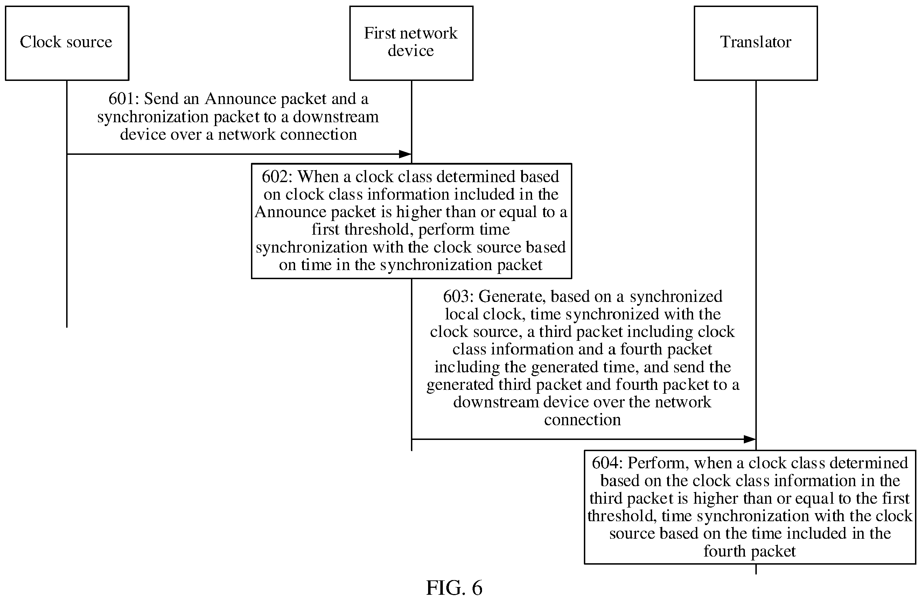

Optionally, refer to FIG. 6. When the network connection passes through at least one network device, a process in which the translator performs time synchronization with the clock source in the first network may be as follows:

Step 601: The clock source in the first network sends an Announce packet and a synchronization packet to a downstream device over the network connection, where the Announce packet includes clock class information of the clock source, and the synchronization packet includes time of the clock source.

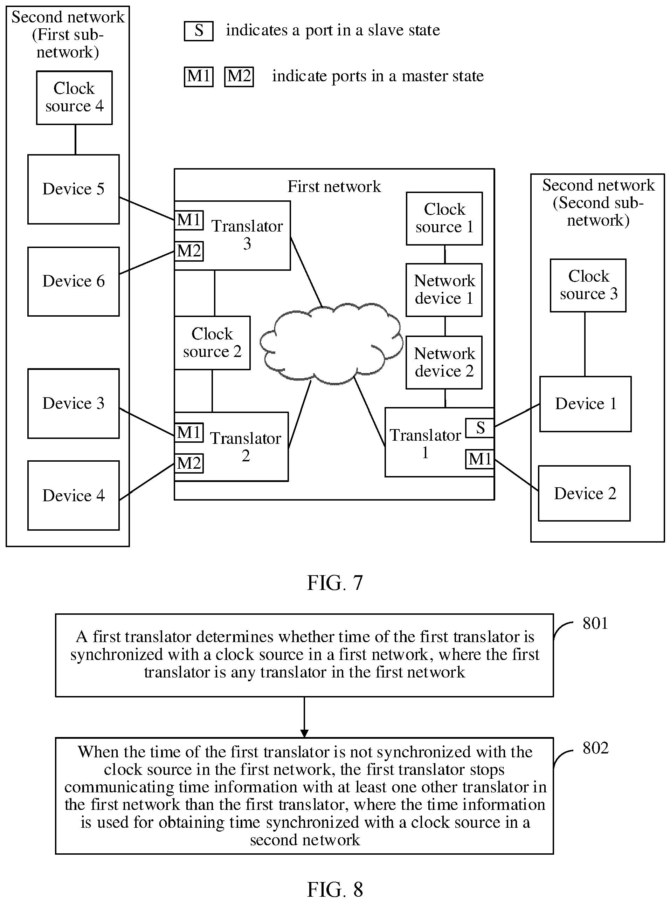

For example, refer to FIG. 7. It is assumed that the translator is the translator 1 in the first network, a network connection is established between the translator 1 and the clock source 1 in the first network, and the network connection passes through a network device 1 and a network device 2. The clock source 1 sends an Announce packet and a synchronization packet over the network connection, where the Announce packet includes clock class information of the clock source, and the synchronization packet includes time of the clock source.

Step 602: A first network device receives the Announce packet and the synchronization packet over the network connection, performs, when a clock class determined based on the clock class information included in the Announce packet is higher than or equal to the first threshold, time synchronization with the clock source based on the time in the synchronization packet, and performs step 603.

The first network device is any network device through which the network connection between the clock source and the first translator passes.

Optionally, when the clock class determined by the first network device based on the clock class information included in the Announce packet is lower than the first threshold, the first network device generates time, where the time may have a large deviation from the time of the clock source. The first network device generates a third packet including the clock class information and a fourth packet including the generated time, and sends the generated third packet and the generated fourth packet to a downstream device over the network connection.

A type of the third packet may be an Announce packet, and a type of the fourth packet may be a synchronization packet. Alternatively, a type of the third packet and a type of the fourth packet may be packet types defined in a communication protocol used between the first network device and the translator.

It should be noted that a reason why the clock class determined by the first network device based on the clock class information in the Announce packet is lower than the first threshold may be that a second network device does not receive the Announce packet and the synchronization packet over the network connection within a timeout interval, where the second network device is a network device through which the network connection between the clock source and the first network device passes. After the timeout interval expires, the second network device generates time based on a local clock, where the time may have a large deviation from the time of the clock source; generates an Announce packet including clock class information of the second network device and a synchronization packet including the generated time, where the clock class information of the second network device is a clock class of the second network device or a clock class identifier that indicates the clock class of the second network device, and the clock class of the second network device is lower than the first threshold; and sends the generated Announce packet and synchronization packet to a downstream device over the network connection.

For example, refer to FIG. 7. It is assumed that the first network device is the network device 2, and the second network device is the network device 1. If the network device 1 does not receive the Announce packet and the synchronization packet within the timeout interval, the network device 1 generates time based on a local clock, where the time may have a large deviation from the time of the clock source; generates an Announce packet including clock class information of the network device 1 and a synchronization packet including the generated time, where the clock class information is a clock class of the network device 1 or a clock class identifier that indicates the clock class of the network device 1, and the clock class of the network device 1 is lower than the first threshold; and sends the generated Announce packet and synchronization packet to a downstream device (the network device 2). The network device 2 receives the Announce packet and the synchronization packet. In this case, the clock class determined by the network device 2 based on the clock class information included in the Announce packet is lower than the first threshold.

A reason why the second network device does not receive the Announce packet and the synchronization packet within the timeout interval may be that a fault occurs in a link between the second network device and an upstream device of the second network device.

Step 603: The first network device generates, based on a synchronized local clock, time synchronized with the clock source, generates the third packet including the clock class information and the fourth packet including the generated time, and sends the generated third packet and fourth packet to a downstream device over the network connection.

When receiving the packets (the Announce packet and the synchronization packet, or the third packet and the fourth packet), another network device through which the network connection between the clock source and the translator passes, performs an operation the same as that performed by the first network device. An upstream device connected to the translator also performs an operation the same as that performed by the first network device, and sends a third packet including the clock class information and a fourth packet including time generated by the upstream device to the translator.

For example, refer to FIG. 7. The network device 1 receives the Announce packet and the synchronization packet over the network connection, and the clock class determined based on the clock class information included in the Announce packet is higher than or equal to the first threshold. Therefore, the network device 1 performs time synchronization with the clock source based on the time included in the synchronization packet; generates, based on the local clock, time synchronized with the clock source; generates a third packet 1 including the clock class information and a fourth packet 1 including the generated time; and sends the generated third packet 1 and fourth packet 1 over the network connection.

The network device 2 (which is an upstream device of the translator 1) receives the third packet 1 and the fourth packet 1 over the network connection; performs, when the clock class determined based on the clock class information included in the third packet 1 is higher than or equal to the first threshold, time synchronization with the clock source based on the time included in the fourth packet 1; generates, based on a local clock, time synchronized with the clock source, a third packet 2 including the clock class information and a fourth packet 2 including the generated time; and sends, over the network connection, a third packet 2 including the clock class information and a fourth packet 2 including the generated time.

Step 604: The translator receives the third packet and the fourth packet, and performs, when the clock class determined based on the clock class information in the third packet is higher than or equal to the first threshold, time synchronization with the clock source based on the time included in the fourth packet.

Optionally, when the clock class determined based on the clock class information in the third packet is lower than the first threshold, the translator stops performing time synchronization with the clock source.

For example, refer to FIG. 7. The translator 1 receives the third packet 2 and the fourth packet 2, and performs, when the clock class determined based on the clock class information included in the third packet 2 is higher than or equal to the first threshold, time synchronization with the clock source based on the time included in the fourth packet 2.

For another example, it is assumed that a link between the network device 1 and the clock source 1 is faulty. As a result, the network device 1 does not receive the Announce packet or the synchronization packet within the timeout interval. After the timeout interval expires, the network device 1 generates time based on the local clock, where the time may have a large deviation from time of the clock source 1; generates a third packet 1 including the clock class information of the network device 1 and a fourth packet 1 including the generated time, where the clock class of the network device 1 is lower than the first threshold; and sends the generated third packet 1 and fourth packet 1 over the network connection. In this way, the clock class information included in the third packet 2 sent by the network device 2 is also the clock class information of the network device 1, and the time included in the sent fourth packet 2 may also have a large deviation from the time of the clock source 1. In this way, the translator 1 does not perform time synchronization with the clock source 1.

Refer to FIG. 8. An embodiment of this application provides a time synchronization fault processing method. The method may be applied to the network architecture shown in FIG. 1 or FIG. 7. The method may be performed by any translator in a first network, and the translator is an independent device. The method includes the following steps.

Step 801: A first translator determines whether time of the first translator is synchronized with a clock source in the first network, where the first translator is any translator in the first network.

The first translator may be any translator (which may be an NW-TT or a DS-TT) in the first network. The first translator may include or not include a port in a slave state.

In this step, the following two manners may be used to determine whether the time of the first translator is synchronized with the clock source in the first network. The two manners are respectively as follows:

In a first manner, at least one second packet is received, where each second packet is used by the first translator for performing time synchronization with the clock source in the first network, and whether the time of the first translator is synchronized with the clock source in the first network is determined based on the at least one second packet.

The at least one second packet includes clock class information and/or time, and the like. The clock class information may be or may not be clock class information of the clock source in the first network. The time may be or may not be synchronized with time of the clock source.

A type of the second packet includes an Announce packet, a Sync packet, a Follow_up packet, a Delay_Req packet, a Delay_Resp packet, a Pdelay_Req packet, a Pdelay_Resp packet, or a Pdelay_Resp_Follow_up packet. Alternatively, a type of the second packet is the foregoing third packet or fourth packet.

A network connection is established between the first translator and a clock source in the first network, and between the first translator and the clock source, the network connection may pass through at least one network device, or may not pass through any network device.

When the network connection does not pass through any network device, the at least one second packet received by the first translator is an Announce packet and/or a synchronization packet sent by the clock source to the first translator.

For example, refer to FIG. 1 to FIG. 3. It is assumed that the first translator is the translator 1, and the clock source having the established network connection to the translator 1 is the clock source 1 in the first network. The clock source 1 sends an Announce packet and/or a synchronization packet to the translator 1, where the Announce packet includes clock class information of the clock source 1, and the synchronization packet includes time of the clock source 1. In this case, the at least one second packet received by the first translator is the Announce packet and/or the synchronization packet sent by the clock source 1 to the translator 1.

When the network connection passes through at least one network device, the at least one second packet received by the first translator includes a third packet and/or a fourth packet that are/is sent by an upstream device connected to the first translator.

For example, refer to FIG. 7. It is assumed that the first translator is the translator 1 in the first network, and at least one second packet received by the translator 1 includes a third packet 2 and/or a fourth packet 2 that are/is sent by the network device 2 (an upstream device connected to the translator 1).

The operation in which the first translator determines, based on the at least one second packet, whether the time of the first translator is synchronized with the clock source in the first network may be:

When the at least one second packet includes a packet including the clock class information, the first translator determines, based on the clock class information included in the packet, whether a clock class corresponding to the clock class information is lower than a first threshold, and determines, when the clock class is lower than the first threshold, that the time of the first translator is not synchronized with the clock source in the first network.

When the clock class information is the clock class, the first translator uses the clock class information as the clock class, and determines whether the clock class is lower than the first threshold; or
when the clock class information is a clock class identifier indicating the clock class, the clock class identifier indicates whether the clock class is lower than the first threshold, and the first translator determines, based on the clock class identifier, whether the clock class is lower than the first threshold.

When the at least one second packet includes a packet including the time, the first translator calculates a time deviation between the first translator and the clock source in the first network based on the packet; and determines, when the time deviation exceeds a second threshold, that the time of the first translator is not synchronized with the clock source in the first network.

When the first translator receives the packet including the time, a local clock of the first translator generates time, and the first translator calculates the time deviation between the first translator and the clock source in the first network based on the time included in the packet and the generated time.

A reason why the time deviation exceeds the second threshold may be as follows: A module that is of the first translator and that is configured to perform time synchronization is faulty. As a result, the time deviation between the first translator and the clock source exceeds the second threshold. Alternatively, a module that is configured to perform time synchronization and that is of the upstream device of the first translator is faulty. As a result, the time deviation between the first translator and the clock source exceeds the second threshold.

In a second manner, when the first translator does not obtain a second packet within a timeout interval, the first translator determines that the time of the first translator is not synchronized with the clock source in the first network, where the second packet is used by the first translator for performing time synchronization with the clock source in the first network.

For an upstream device connected to the first translator in the first network, when the upstream device is not a clock source, the second packet may be a third packet and/or a fourth packet sent by the upstream device, a type of the third packet includes an Announce packet or another type defined in a protocol, and a type of the fourth packet includes a Sync packet, a Follow_up packet, a Delay_Req packet, a Delay_Resp packet, a Pdelay_Req packet, a Pdelay_Resp packet, a Pdelay_Resp_Follow_up packet, or another type defined in a protocol.

When the upstream device is a clock source, the second packet may be an Announce packet and/or a synchronization packet sent by the clock source connected to the first translator. To be specific, a type of the second packet in the second manner includes an Announce packet, a Sync packet, a Follow_up packet, a Delay_Req packet, a Delay_Resp packet, a Pdelay_Req packet, a Pdelay_Resp packet, or a Pdelay_Resp_Follow_up packet.

A reason why the first translator does not obtain the second packet within a timeout interval may be that a link between the first translator and the upstream device connected to the first translator is faulty. As a result, a packet sent by the upstream device cannot be transmitted to the first translator through the link.

Step 802: When the time of the first translator is not synchronized with the clock source in the first network, the first translator stops communicating time information with at least one other translator in the first network than the first translator, where the time information is used for obtaining time synchronized with a clock source in a second network.

A manner in which the first translator stops communicating the time information with the at least one other translator in the first network than the first translator includes: When the first translator includes a port in a slave state, the first translator stops sending the time information to the other translators; or when the first translator does not include a port in a slave state, the first translator stops receiving the time information sent by the other translators or discards the received time information.

The time information includes a clock class of the clock source in the second network.

Alternatively, the time information includes second time that is synchronized with the clock source in the second network and that is obtained by a target translator and third time generated by the target translator, when the target translator receives a synchronization packet sent by a target device, where the target translator is a translator including a port in the slave state (for example, the translator 1 in the embodiment shown in FIG. 4), the target device is a device communicating with the port in the slave state (for example, the device 1 in the embodiment shown in FIG. 4), and a type of the synchronization packet is a Sync packet or a Follow_up packet. For example, the time information includes second time obtained by the translator 1 and third time generated by the translator 1 in the embodiment shown in FIG. 4, where the second time is time synchronized with the master clock source 3 in the second network when the translator 1 receives a packet 1, and the packet 1 is a synchronization packet.

Alternatively, the time information includes a first transmission delay between a target translator and a target device, third time generated by the target translator, and first time included in a synchronization packet sent by the target device, where the first time is time synchronized with the clock source in the second network when the target device needs to send the synchronization packet. For example, the time information includes a first transmission delay between the translator 1 and the device 1, third time generated by the translator 1, and first time included in a packet 1 sent by the device 1 in the embodiment shown in FIG. 4.

In this step, the first translator may further continue to send the time synchronized with the clock source in the second network to a device that communicates with the first translator and that is in the second network, where the device is located in the second network.

In this step, the clock source in the second network is a master clock source in the second network. For the device communicating with the first translator, if the device is an end station, when receiving the time synchronized with the clock source in the second network, the device performs time synchronization with the clock source in the second network based on the time. If the device is a TSN bridge, when receiving the time synchronized with the clock source in the second network, the device sends, to another device that is connected to the device and that is in the second network, the time synchronized with the clock source in the second network.

The clock source in the second network is located in a second sub-network in the second network. The device communicating with the first translator is located in a first sub-network or the second sub-network in the second network.

In this step, the first translator may stop communicating the time information with the other translators in the following two manners. The two manners are respectively as follows:

In a first manner, the first translator disconnects a synchronization tunnel to the at least one other translator in the first network than the first translator, where the synchronization tunnel is used by the first translator for receiving or sending a first packet, and the first packet includes the time information.

A packet type of the first packet includes one or more of an Announce packet, a Sync packet, and a Follow_up packet. To be specific, when a type of the first packet is an Announce packet, the first packet includes the clock class of the master clock source; or when a type of the first packet is a Sync packet or a Follow_up packet, the first packet includes the second time that is synchronized with the master clock source and that is obtained by the target translator and the third time generated by the target translator, or the first packet includes the first transmission delay between the target translator and the target device, the third time generated by the target translator, and the first time included in the synchronization packet sent by the target device.

The first packet is a 1588 packet, to be specific, the synchronization tunnel is used by the first translator for receiving or sending the 1588 packet. After the synchronization tunnel is disconnected, the first translator is isolated from the other translators in the first network, so that the first translator stops sending the 1588 packet to the other translators or stops receiving the 1588 packet sent by the other translators.

In a first manner, the first translator actively disconnects the synchronization tunnel, or the first translator disconnects the synchronization tunnel under triggering of a configuration device.

For a manner in which the first translator actively disconnects the synchronization tunnel, when the time of the first translator is not synchronized with the clock source in the first network, the first translator disconnects the synchronization tunnel to the at least one other translator.

The first translator may further send a fault identifier to the configuration device, where the fault identifier indicates that the time of the first translator is not synchronized with the clock source in the first network.

For a manner in which the first translator disconnects the synchronization tunnel under triggering of the configuration device, when the time of the first translator is not synchronized with the clock source in the first network, the first translator sends the fault identifier to the configuration device, receives a stop command sent by the configuration device based on the fault identifier, and disconnects, under triggering of the stop command, the synchronization tunnel between the first translator and the at least one other translator.

The first translator may be a translator (the target translator) including a port in the slave state; or may be a translator that does not include a port in the slave state. The following uses the network architecture shown in FIG. 1 as an example to separately describe the two first translators one by one.

Refer to FIG. 1 or FIG. 7. When the first translator is the translator 1 including the port in the slave state, the port in the slave state communicates with the device 1 in the second network. The device 1 sends a packet 1 and/or an Announce packet 1 to the first translator (the translator 1), where the Announce packet 1 is the Announce packet 1 in the embodiment shown in FIG. 4, and the Announce packet 1 includes the clock class of the master clock source 3. The packet 1 is the packet 1 in the embodiment shown in FIG. 4. The packet 1 includes the first time synchronized with the master clock source, and the packet type of the packet 1 is a Sync packet, a Follow_up packet, or the like.

The synchronization tunnel between the first translator and the other translators in the first network is disconnected, to be specific, a synchronization tunnel between the first translator and the translator 2 is disconnected, and a synchronization tunnel between the first translator and the translator 3 is disconnected. Therefore, the first translator stops sending the first packet to the translator 2 and the translator 3, where the first packet is a packet 2 and/or an Announce packet 2, the Announce packet 2 is the Announce packet 2 in the embodiment shown in FIG. 4, and the Announce packet 2 includes the clock class of the master clock source 3. The packet 2 is the packet 2 in the embodiment shown in FIG. 4, the packet 2 includes the second time and the third time; or the packet 2 includes the first transmission time, the first time, and the third time, and the packet type of the packet 2 is a Sync packet, a Follow_up packet, or the like.

The time of the first translator is not synchronized with the clock source in the first network, the third time obtained by the first translator is incorrect, and a clock source referenced by time generated by the translator 2 and time generated by the translator 3 is deviated from a clock source referenced by the third time. Therefore, after the first translator sends the packet 2 to the translator 2 and the translator 3, the time that is synchronized with the master clock source 3 and that is obtained by the translator 2 and the translator 3 based on the second time and the third time that are included in the packet 2 and the locally generated time is also incorrect time; or the time that is synchronized with the master clock source 3 and that is obtained by the translator 2 and the translator 3 based on the first time, the first transmission delay, and the third time that are included in the packet 2 and the locally generated time is also incorrect time. However, in the first manner, because the first translator stops sending the packet 2 to the translator 2 and the translator 3, the translator 2 cannot obtain the incorrect time, and further does not send the incorrect time to the device 3 and the device 4, and the translator 3 cannot obtain the incorrect time, and further does not send the incorrect time to the device 5 and the device 6. The device 3 and the device 4 that communicate with the translator 2 are prevented from obtaining the incorrect time, and further the device 3 and the device 4 are prevented from performing synchronization with the master clock source 3 based on the incorrect time, to avoid a synchronization error. In addition, the device 5 and the device 6 that communicate with the translator 3 are prevented from obtaining the incorrect time, and further the device 5 and the device 6 are prevented from performing synchronization with the master clock source 3 based on the incorrect time, to avoid a synchronization error.

Alternatively, because the first translator stops sending the Announce packet 2 to the translator 2 and the translator 3, the translator 2 does not send the Announce packet to the device 3 and the device 4, and the translator 3 does not send the Announce packet to the device 5 and the device 6. When the device 3 and the device 4 do not receive the Announce packet, the device 3 and the device 4 reject receiving of the incorrect time sent by the translator 2, to prevent the device 3 and the device 4 from performing synchronization with the master clock source 3 based on the incorrect time, so as to avoid a synchronization error. When the device 5 and the device 6 do not receive the Announce packet, the device 5 and the device 6 reject receiving of the incorrect time sent by the translator 3, to prevent the device 5 and the device 6 from performing synchronization with the master clock source 3 based on the incorrect time, so as to avoid a synchronization error.

When the first translator is the translator 2 that includes no port in the slave state, the first translator (the translator 2) cannot receive the first packet because the synchronization tunnel between the first translator and the translator 1 that includes the port in the slave state is disconnected, where the first packet is the packet 2 and/or the Announce packet 2. When the first packet is the packet 2, because the time of the first translator is not synchronized with the clock source in the first network, time locally generated by the first translator is incorrect, and a time clock source referenced by the time locally generated by the first translator deviates from a clock source referenced by the third time included in the packet 2. In addition, because the first translator cannot receive the packet 2, the first translator does not obtain incorrect time based on the second time and the third time that are included in the packet 2 and the locally generated time, or does not obtain incorrect time based on first time, the first transmission delay, and the third time that are included in the packet 2 and the locally generated time. In addition, the first translator does not send the incorrect time to the device 3 and the device 4 that communicate with the first translator. When the first packet is the Announce packet 2, because the first translator cannot receive the Announce packet 2, the first translator stops sending the Announce packet to the device 3 and the device 4. In this way, the device 3 and the device 4 reject receiving of the incorrect time sent by the first translator, so that the device 3 and the device 4 are prevented from performing synchronization with the master clock source 3 based on the incorrect time, so as to avoid a synchronization error.

In a second manner, the first translator stops communicating a first packet with the at least one other translator in the first network than the first translator.

A packet type of the first packet includes one or more of an Announce packet, a Sync packet, and a Follow_up packet. To be specific, when a type of the first packet is an Announce packet, the first packet includes the clock class of the master clock source; or when a type of the first packet is a Sync packet or a Follow_up packet, the first packet includes the second time that is synchronized with the master clock source and that is obtained by the target translator and the third time generated by the target translator, or the first packet includes the first transmission delay between the target translator and the target device, the third time generated by the target translator, and the first time included in the synchronization packet sent by the target device.

The stopping communicating a first packet means that the first translator stops sending the first packet to the other translators, stops receiving the first packet sent by the other translators, or discards the first packet received from the other translators.

In the second manner, the first translator actively stops communicating the first packet; or the first translator stops, under triggering of a configuration device, communicating the first packet.

For a manner in which the first translator actively stops communicating the first packet, when the time of the first translator is not synchronized with the clock source in the first network, the first translator stops communicating the first packet with the at least one other translator.

The first translator may further send a fault identifier to the configuration device, where the fault identifier indicates that the time of the first translator is not synchronized with the clock source in the first network.

For a manner in which the first translator stops, under triggering of the configuration device, communicating the first packet, when the time of the first translator is not synchronized with the clock source in the first network, the first translator sends the fault identifier to the configuration device; receives a stop command sent by the configuration device based on the fault identifier, where the stop command includes the type of the first packet; and stops, under triggering of the stop command, communicating the first packet with the at least one other translator.

When the first translator includes the port in the slave state, the configuration device sets a status of a port on a second translator in the first network to the slave state, where the second translator is a translator in the first network other than the first translator.

The first translator may be a translator including the port in the slave state; or may be a translator that does not include the port in the slave state. The following uses the network architecture shown in FIG. 1 as an example to separately describe the two first translators one by one.

Refer to FIG. 1 or FIG. 7. When the first translator is the translator 1 including the port in the slave state, the port in the slave state communicates with the device 1 in the second network. The device 1 sends a packet 1 and/or an Announce packet 1 to the first translator (the translator 1), where the Announce packet 1 is the Announce packet 1 in the embodiment shown in FIG. 4, and the Announce packet 1 includes the clock class of the master clock source 3. The packet 1 is the packet 1 in the embodiment shown in FIG. 4. The packet 1 includes the first time synchronized with the master clock source, and the packet type of the packet 1 is a Sync packet, a Follow_up packet, or the like.

In the second manner, the first translator stops sending the first packet to the translator 2 and the translator 3, where the first packet is a packet 2 and/or an Announce packet 2, the Announce packet 2 is the Announce packet 2 in the embodiment shown in FIG. 4, and the Announce packet 2 includes the clock class of the master clock source 3. The packet 2 is the packet 2 in the embodiment shown in FIG. 4, the packet 2 includes the second time and the third time; or the packet 2 includes the first time, the first transmission delay, and the third time, and the packet type of the packet 2 is a Sync packet, a Follow_up packet, or the like.

The time of the first translator is not synchronized with the clock source in the first network, the third time obtained by the first translator is incorrect, and a clock source referenced by the third time reference deviates from a clock source referenced by time generated by the translator 2 and time generated by the translator 3. Therefore, after the first translator sends the packet 2 to the translator 2 and the translator 3, the time that is synchronized with the master clock source 3 and that is obtained by the translator 2 and the translator 3 based on the second time and the third time that are included in the packet 2 and the locally generated time is also incorrect time; or the time that is synchronized with the master clock source 3 and that is obtained by the translator 2 and the translator 3 based on the first time, the first transmission delay, and the third time that are included in the packet 2 and the locally generated time is also incorrect time. However, in the second manner, because the first translator stops sending the packet 2 to the translator 2 and the translator 3, the translator 2 cannot obtain the incorrect time, and further does not send the incorrect time to the device 3 and the device 4, and the translator 3 cannot obtain the incorrect time, and further does not send the incorrect time to the device 5 and the device 6. The device 3 and the device 4 that communicate with the translator 2 are prevented from obtaining the incorrect time, and further the device 3 and the device 4 are prevented from performing synchronization with the master clock source 3 based on the incorrect time, to avoid a synchronization error. In addition, the device 5 and the device 6 that communicate with the translator 3 are prevented from obtaining the incorrect time, and further the device 5 and the device 6 are prevented from performing synchronization with the master clock source 3 based on the incorrect time, to avoid a synchronization error. Alternatively:

Because the first translator stops sending the Announce packet 2 to the translator 2 and the translator 3, the translator 2 does not send the Announce packet to the device 3 and the device 4, and the translator 3 does not send the Announce packet to the device 5 and the device 6. When the device 3 and the device 4 do not receive the Announce packet, the device 3 and the device 4 reject receiving of the incorrect time sent by the translator 2, to prevent the device 3 and the device 4 from performing synchronization with the master clock source 3 based on the incorrect time, so as to avoid a synchronization error. When the device 5 and the device 6 do not receive the Announce packet, the device 5 and the device 6 reject receiving of the incorrect time sent by the translator 3, to prevent the device 5 and the device 6 from performing synchronization with the master clock source 3 based on the incorrect time, so as to avoid a synchronization error.

When the first translator is the translator 2 that includes no port in the slave state, the first translator stops receiving the first packet, where the first packet is the packet 2 and/or the Announce packet 2. When the first packet is the packet 2, the packet 2 includes the second time and the third time; or the packet 2 includes the first time, the first transmission time, and the third time. Because the time of the first translator is not synchronized with the clock source in the first network, time locally generated by the first translator is incorrect, and a time clock source referenced by the time locally generated by the first translator deviates from a clock source referenced by the third time included in the packet 2. In the second manner, because the first translator stop receiving the packet 2, the first translator does not obtain incorrect time based on the second time and the third time that are included in the packet 2 and the locally generated time, or does not obtain incorrect time based on first time, the first transmission delay, and the third time that are included in the packet 2 and the locally generated time. In addition, the first translator does not send the incorrect time to the device 3 and the device 4 that communicate with the first translator. When the first packet is the Announce packet 2, because the first translator stops receiving the Announce packet 2, the first translator stops sending the Announce packet to the device 3 and the device 4. In this way, the device 3 and the device 4 reject receiving of the incorrect time sent by the first translator, so that the device 3 and the device 4 are prevented from performing synchronization with the master clock source 3 based on the incorrect time, so as to avoid a synchronization error.

In the first manner or the second manner, after receiving the fault identifier, the configuration device determines whether the first translator includes the port in the slave state. When the first translator includes the port in the slave state, the configuration device sets a status of a port on the second translator in the first network to the slave state, where the second translator is a translator in the first network other than the first translator.

Optionally, the configuration device records a port status of each port on each translator. Therefore, after receiving the fault identifier sent by a control device, the configuration device may determine the first translator, and determine, based on the locally recorded port status of each port on each translator, whether the first translator includes the port in the slave state.

The operation in which the configuration device sets the status of the port on the second translator in the first network to the slave state may be:

The configuration device may notify each translator in the first network other than the first translator. For each of the other translators, the translator sends a port dataset of a port on the translator to the configuration device. The configuration device receives the port dataset of the port on each of the other translators, and configures, based on the port dataset of the port on the translator, a status of a port on one translator to the slave state, where the translator is the second translator.

The port dataset of the port on the translator includes a port identifier of the port; or a port identifier and a clock parameter of the port.

Optionally, the clock parameter is a PTP clock parameter. The port dataset of the port is a PTP port dataset.

Optionally, the clock parameter includes one or more of a domain number (domain Number), a PTP protocol version number (Minor Version PTP, version PTP), a standard organization major identifier (major SdoId), a standard organization minor identifier (minor SdoId), a grandmaster clock priority 1 (grandmaster Priority1), a grandmaster clock identifier (grandmaster Identity), a grandmaster clock class (grandmaster Clock Quality), a grandmaster clock priority 2 (grandmaster Priority2), a hop count (steps Removed), a source port identifier (source Port Identity), an identifier (flags), a current leap second value (current UtcOffset), a time source (time Source), and a tracing path identifier (Path trace TLV).

Optionally, the operation in which the configuration device configures the status of the port on the translator to the slave state may be: The configuration device selects an optimal dataset from the port dataset of the port on each of the other translators, and compares the optimal dataset with a preset dataset. When determining that the optimal dataset is better than the preset dataset, the configuration device determines that a port status of a port corresponding to the optimal dataset is the slave state, that is, a translator in which the port is located is the second translator, and sets the status of the port on the second translator to the slave state.

Optionally, the configuration device selects the optimal dataset by using a BMC algorithm, and compares the optimal dataset with the preset dataset.

It should be noted that a device communicating with a port on the second translator may be connected to a clock source in the second network, and the clock source may be a master clock source or a slave clock source in the second network. Therefore, a port dataset of the port on the second translator is an optimal dataset, and is set to the slave state. Then, the device communicating with the port, in the slave state, of the second translator enables the device in the second network to perform time synchronization with the clock source in the second network according to the embodiment shown in FIG. 4.

For example, refer to FIG. 1 or FIG. 7. It is assumed that the first translator is the translator 1 including the port in the slave state. The configuration device notifies the translator 2 and the translator 3. The translator 2 sends a port dataset 21 of the port 1 in the master state and a port dataset 22 of the port 2 in the master state to the configuration device, and the translator 3 sends a port dataset 31 of the port 1 in the master state and a port dataset 32 of the port 2 in the master state to the configuration device. The configuration device receives the four port datasets. Because the device 5 communicating with the port 1, in the master state, on the translator 3 is connected to the clock source 4 in the second network, the configuration device sets the port 1, in the master state, on the translator 3 to the slave state. The device 5 performs time synchronization with the clock source 4, and according to the embodiment shown in FIG. 4, the device 3, the device 4, and the device 6 perform time synchronization with the clock source 4.

Optionally, when the time of the first translator in the first network is resumed to be synchronized with the clock source in the first network, a resume identifier is sent to the configuration device in the first network, where the resume identifier indicates that the time of the first translator is resumed to be synchronized with the clock source in the first network.

The configuration device receives the resume identifier, and configures, based on the resume identifier, a port status of a port on each translator in the first network. Optionally, during implementation:
the configuration device notifies each translator in the first network. For each translator in the first network, after receiving the notification, the translator sends port datasets of ports on the translator to the configuration device.

The configuration device receives the port datasets of the ports on the translators, and configures, based on the port datasets of the ports the translators, a port status of a port on one translator in the first network to the slave state, and a port status of another port on the translator to the master state or another state. The configuration device configures port statuses of ports on other translators in the first network to the master state or another state.

In this embodiment of this application, when the time of the first translator in the first network is not synchronized with the clock source in the first network, communication of the time information between the first translator and the at least one other translator in the first network is stopped. The time information is used for obtaining the time synchronized with the clock source in the second network. In this way, when the first translator includes the port in the slave state, because the first translator stops communicating the time information, the other translators stop sending the obtained time synchronized with the clock source in the second network to the device that communicates with the other translators and that is in the second network. However, in this case, the obtained time synchronized with the clock source in the second network is incorrect time. If the device cannot receive the incorrect time, the device does not perform time synchronization with the clock source in the second network. Therefore, the device does not generate a time synchronization error. In this way, an error that occurs in time synchronization between the device and the clock source in the second network is avoided. Alternatively, when the first translator does not include the port in the slave state, because the first translator stops receiving or discards the time information sent by the other translators, the first translator stops obtaining the time synchronized with the clock source in the second network. However, in this case, the obtained time synchronized with the clock source in the second network is incorrect time, the first translator does not send the time synchronized with the clock source in the second network to the device that communicates with the first translator and that is in the second network, and the device cannot receive the time synchronized with the clock source in the second network, and does not perform time synchronization with the clock source in the second network, so that the device does not generate a time synchronization error, so as to avoid an error that occurs in time synchronization between the device and the clock source in the second network.

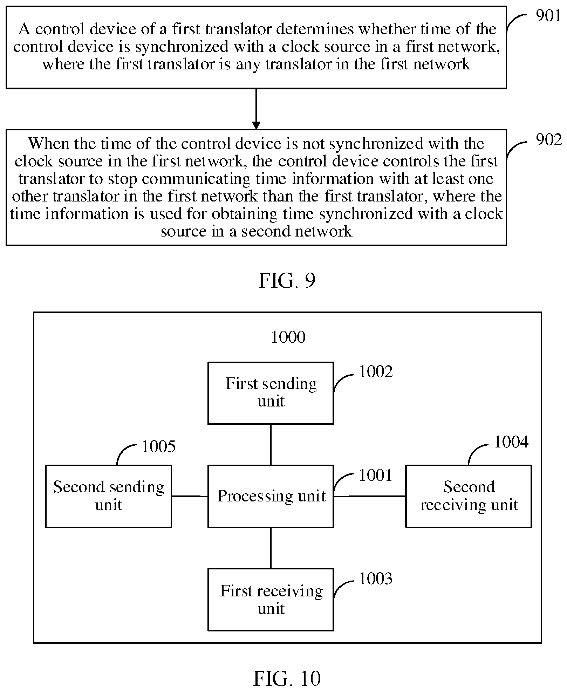

Refer to FIG. 9. An embodiment of this application provides a time synchronization fault processing method. The method may be applied to the network architecture shown in FIG. 2 or FIG. 3. The method may be performed by a control device of a translator. The control device is an upstream device that is connected to the translator and that is in a first network or a device in which the translator is located. The method includes the following steps.

Step 901: A control device of a first translator determines whether time of the control device is synchronized with a clock source in the first network, where the first translator is any translator in the first network.

The first translator may be any translator (which may be an NW-TT or a DS-TT) in the first network. The first translator may include or not include a port in a slave state.

The control device is a device that is in the first network and in which the first translator is located. For example, refer to FIG. 2. It is assumed that the first translator is the translator 1, and the control device is the UPF. It is assumed that the first translator is the translator 2, and the control device is the first UE. It is assumed that the first translator is the translator 3, and the control device is the second UE. Alternatively:

The control device is an upstream device that is in the first network and that is connected to the first translator. For example, refer to FIG. 3. It is assumed that the first translator is the translator 1, and the control device is the UPF. It is assumed that the first translator is the translator 2, and the control device is the first UE. It is assumed that the first translator is the translator 3, and the control device is the second UE.

In this step, at least one second packet is received, where each second packet is used by the control device for performing time synchronization with the clock source in the first network, and whether the time of the first translator is synchronized with the clock source in the first network is determined based on the at least one second packet.

Optionally, the at least one second packet may be the third packet or the fourth packet in the embodiment shown in FIG. 6.

Optionally, for detailed implementation content of determining, based on the at least one second packet, whether the time of the control device is synchronized with the clock source in the first network, refer to related content of determining, based on the at least one second packet, whether the time of the first translator is synchronized with the clock source in the first network in step 801. Details are not described herein again.

Step 902: When the time of the control device is not synchronized with the clock source in the first network, the control device controls the first translator to stop communicating time information with at least one other translator in the first network than the first translator, where the time information is used for obtaining time synchronized with a clock source in a second network.

A meaning of the time information is the same as the meaning of the time information described in step 802 in the embodiment shown in FIG. 8. Details are not described herein again.

When the time of the control device is not synchronized with the clock source in the first network, time included in a fourth packet sent by the control device to the first translator is the time of the control device, and the time is not synchronized with the clock source in the first network. As a result, when receiving the fourth packet, the first translator cannot perform synchronization with the clock source in the first network based on the fourth packet. Therefore, the control device needs to perform the operation of step 902.

In this step, the first translator may further continue to send the time synchronized with the clock source in the second network to a device that communicates with the first translator and that is in the second network, where the device is located in the second network.

In this step, the clock source in the second network is a master clock source in the second network.

In this step, the control device may stop the communication of the time information between the first translator and the other translators in the following two manners. The two manners are respectively as follows:
In a first manner, the control device controls the first translator to disconnect a synchronization tunnel to the at least one other translator in the first network than the first translator, where the synchronization tunnel is used by the first translator for receiving or sending a first packet.

A packet type of the first packet includes one or more of an Announce packet, a Sync packet, and a Follow_up packet. To be specific, when the type of the first packet is an Announce packet, the first packet includes a clock class of the master clock source; or when the type of the first packet is a Sync packet or a Follow_up packet, the first packet includes second time and third time, or the first packet includes first time, a first transmission delay, and third time. For meanings of the first transmission delay, the first time, the second time, and the third time, refer to related content described in step 802 in the embodiment shown in FIG. 8. Details are not described herein again.

The first packet is a 1588 packet, to be specific, the synchronization tunnel is used by the first translator for receiving or sending the 1588 packet. After the synchronization tunnel is disconnected, the first translator is isolated from the other translators in the first network, so that the first translator stops sending the 1588 packet to the other translators or stops receiving the 1588 packet sent by the other translators.

In the first manner, the control device actively controls the first translator to disconnect the synchronization tunnel; or the control device controls, under triggering of a configuration device, the first translator to disconnect the synchronization tunnel.

For the active control manner of the control device, when the time of the control device is not synchronized with the clock source in the first network, the control device controls the first translator to disconnect the synchronization tunnel to the at least one other translator.

The control device may further send a fault identifier to the configuration device, where the fault identifier indicates that the time of the control device is not synchronized with the clock source in the first network.

For the manner in which the control device performs controlling under triggering of the configuration device, when the time of the control device is not synchronized with the clock source in the first network, the control device sends the fault identifier to the configuration device, and receives a stop command sent by the configuration device based on the fault identifier. Under triggering of the stop command, the control device controls the first translator to disconnect the synchronization tunnel to the at least one other translator.

In the first manner, the operation in which the control device controls the first translator may be: The control device sends a control message to the first translator, and the first translator disconnects, under triggering of the control message, the synchronization tunnel to the at least one other translator in the first network than the first translator.

When the control device is the device in which the first translator is located, the control device sends the control message to the first translator through an internal connection. When the control device is the upstream device of the first translator in the first network, the control device sends the control message to the first translator through a network connection to the first translator.

For detailed analysis of how to enable the device in the second network to avoid a synchronization error after the first translator disconnects the synchronization tunnel, refer to related content of the first manner in step 802 in the embodiment shown in FIG. 8. Details are not described herein again.

In a second manner, the control device controls the first translator to stop communicating a first packet with the at least one other translator in the first network than the first translator.

A packet type of the first packet includes one or more of an Announce packet, a Sync packet, and a Follow_up packet. To be specific, when the type of the first packet is an Announce packet, the first packet includes a clock class of the master clock source; or when the type of the first packet is a Sync packet or a Follow_up packet, the first packet includes second time and third time, or the first packet includes first time, a first transmission delay, and third time.

The stopping communicating a first packet means that the first translator stops sending the first packet to the other translators, stops receiving the first packet sent by the other translators, or discards the first packet received from the other translators.

In the second manner, the control device may actively control the first translator to stop communicating the first packet; or the control device controls, under triggering of a configuration device, the first translator to stop communicating the first packet.

For the active control manner of the control device, when the time of the control device is not synchronized with the clock source in the first network, the control device controls the first translator to stop communicating the first packet with the at least one other translator.

The control device may further send a fault identifier to the configuration device, where the fault identifier indicates that the time of the first translator is not synchronized with the clock source in the first network.

For the manner in which the control device performs controlling under triggering of the configuration device, when the time of the control device is not synchronized with the clock source in the first network, the control device sends the fault identifier to the configuration device, receives a stop command sent by the configuration device based on the fault identifier, where the stop command includes the type of the first packet, and controls, under triggering of the stop command, the first translator to stop communicating the first packet with the at least one other translator.

In the second manner, the operation in which the control device controls the first translator may be: The control device sends a control message to the first translator, where the control message includes the type of the first packet. The first translator stops, for the type of the first packet included in the control message, communicating the first packet with the at least one other translator in the first network than the first translator.

When the control device is the device in which the first translator is located, the control device sends the control message to the first translator through an internal connection. When the control device is the upstream device of the first translator in the first network, the control device sends the control message to the first translator through a network connection to the first translator.

For detailed analysis of how to enable the device in the second network to avoid a synchronization error after the first translator stops communicating the first packet, refer to related content of the second manner in step 802 in the embodiment shown in FIG. 8. Details are not described herein again.

In the first manner or the second manner, after receiving the fault identifier, the configuration device determines whether the first translator connected to the control device includes the port in the slave state. When the first translator includes the port in the slave state, the configuration device sets a status of a port on the second translator in the first network to the slave state, where the second translator is a translator in the first network other than the first translator.

Optionally, the configuration device records a port status of each port on each translator in the first network and a topology structure of the first network. Therefore, after receiving the fault identifier sent by the control device, the configuration device may determine the first translator connected to the control device, and determine, based on the locally recorded port status of each port on each translator, whether the first translator includes the port in the slave state.

For a detailed process in which the configuration device sets the port status, refer to related content in step 802 in the embodiment shown in FIG. 8. Details are not described herein again.

Optionally, when the time of the control device is resumed to be synchronized with the clock source in the first network, the control device sends a resume identifier to the configuration device in the first network, where the resume identifier indicates that the time of the control device is resumed to be synchronized with the clock source in the first network.

The configuration device receives the resume identifier, and configures, based on the resume identifier, a port status of a port on each translator in the first network.

For a detailed process in which the configuration device configures the port status of the port on each translator, refer to related content in step 802 in the embodiment shown in FIG. 8. Details are not described herein again.

In this embodiment of this application, when the time of the control device is not synchronized with the clock source in the first network, the first translator is controlled to stop communicating the time information with the at least one other translator in the first network, where the time information is used for obtaining the time synchronized with the clock source in the second network. In this way, when the first translator includes the port in the slave state, the first translator stops, under control of the control device, sending the time information to the other translators. In this way, the other translators stops, based on the time information, obtaining the time synchronized with the clock source in the second network, and the time is incorrect time. In this way, another device does not send the incorrect time to a device that communicates with the other translators and that is in the second network, and the device cannot receive the incorrect time, and does not perform time synchronization with the clock source in the second network, so that the device does not generate a time synchronization error, so as to avoid an error that occurs in time synchronization between the device and the clock source in the second network. When the first translator does not include the port in the slave state, the first translator stops, under control of the control device, receiving the time information sent by the other translators, and the first translator does not obtain, based on the time information, the time synchronized with the clock source in the second network, and the time is incorrect time. In this way, the first translator does not send the incorrect time to the device that communicates with the first translator and that is in the second network, and the device cannot receive the incorrect time, and does not perform time synchronization with the clock source in the second network, so that the device does not generate a time synchronization error, so as to avoid an error that occurs in time synchronization between the device and the clock source in the second network.

Refer to FIG. 10. An embodiment of this application provides a time synchronization fault processing apparatus 1000. The apparatus 1000 may be deployed in the translator in any one of the foregoing embodiments, and includes:
a processing unit 1001, configured to: when time of the apparatus 1000 in a first network is not synchronized with a clock source in the first network, stop communicating time information with at least one other translator in the first network than the apparatus 1000, where the time information is used for obtaining time synchronized with a clock source in a second network.

Optionally, for a detailed implementation process in which the processing unit 1001 stops communicating the time information, refer to related content in step 802 in the embodiment shown in FIG. 8. Details are not described herein again.

Optionally, the apparatus 1000 further includes a first sending unit 1002, where
the first sending unit 1002 is configured to send a fault identifier to a configuration device in the first network, where the fault identifier indicates that the time of the apparatus 1000 is not synchronized with the clock source in the first network.

When the apparatus 1000 includes a port in a slave state, the configuration device sets a status of a port on a second translator in the first network to the slave (slave) state, where the second translator is a translator in the first network other than the apparatus 1000.

Optionally, the apparatus 1000 further includes a first receiving unit 1003, where
the first receiving unit 1003 is configured to receive a stop command sent by the configuration device based on the fault identifier; and
the processing unit 1001 is configured to stop, according to the stop command, communicating the time information with the at least one other translator in the first network than the apparatus 1000.

Optionally, the processing unit 1001 is configured to disconnect a synchronization tunnel to the at least one other translator in the first network than the apparatus 1000, where the synchronization tunnel is used by the apparatus 1000 for receiving or sending a first packet, and the first packet includes the time information.

Optionally, for a detailed implementation process in which the processing unit 1001 disconnects the synchronization tunnel, refer to related content in step 802 in the embodiment shown in FIG. 8. Details are not described herein again.

Optionally, the processing unit 1001 is configured to stop communicating a first packet with the at least one other translator in the first network than the apparatus 1000, where the first packet includes the time information.

Optionally, the apparatus 1000 further includes a second receiving unit 1004, where
the second receiving unit 1004 is configured to receive a second packet, where the second packet is used by the apparatus 1000 for performing time synchronization with the clock source in the first network; and
the processing unit 1001 is further configured to determine, based on the second packet, whether the time of the apparatus 1000 is synchronized with the clock source in the first network.

Optionally, for a detailed implementation process in which the processing unit 1001 determines whether the time of the apparatus 1000 is synchronized with the clock source in the first network, refer to related content in step 801 in the embodiment shown in FIG. 8. Details are not described herein again.

Optionally, the second packet includes a clock class; and
the processing unit 1001 is configured to: when the clock class is lower than a first threshold, determine that the time of the apparatus 1000 is not synchronized with the clock source in the first network.

Optionally, the second packet is a packet that carries time information; and
the processing unit 1001 is configured to: when a time deviation that is between the apparatus 1000 and the clock source in the first network and that is calculated based on the second packet exceeds a second threshold, determine that the time of the apparatus 1000 is not synchronized with the clock source in the first network.

Optionally, the processing unit 1001 is further configured to: when the apparatus 1001 does not obtain a second packet within a timeout interval, determine that the time of the apparatus 1000 is not synchronized with the clock source in the first network, where the second packet is used by the apparatus 1000 for performing time synchronization with the clock source in the first network.

Optionally, the apparatus 1000 further includes a second sending unit 1005, where
the second sending unit 1005 is configured to send a resume identifier to the configuration device in the first network, where the resume identifier indicates that the time of the apparatus 1000 is resumed to be synchronized with the clock source in the first network, and the resume identifier is used by the configuration device for configuring a port status of a port on each translator in the first network.

Optionally, the second network is a time sensitive network TSN.

Optionally, the first network is a 5G network.

In this embodiment of this application, because the processing unit stops communicating the time information with the at least one other translator in the first network than the apparatus, the time information is used for obtaining the time synchronized with the clock source in the second network. The apparatus does not obtain, based on the time information, the time synchronized with the clock source in the second network, and further does not send the time synchronized with the clock source in the second network to a device communicating with the apparatus. Alternatively, the apparatus stops sending the time information to the other translators, and the other translators do not obtain, based on the time information, the time synchronized with the clock source in the second network, so that the other translators do not send, to a device communicating with the other translators, the time synchronized with the clock source in the second network. The device communicating with that apparatus or a device communicating with the other translators does not receive incorrect time. Further, local time of the device is not adjusted based on the incorrect time, to avoid a synchronization error.

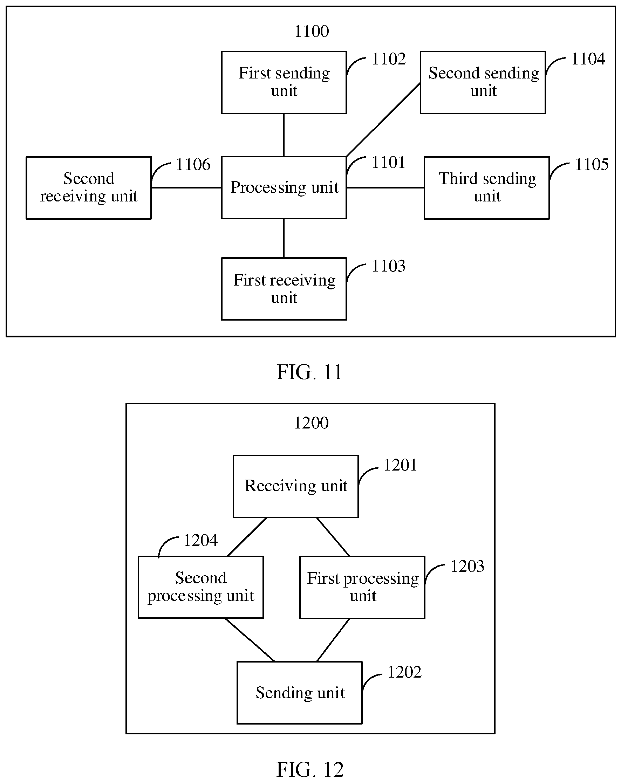

Refer to FIG. 11. An embodiment of this application provides a time synchronization fault processing apparatus 1100. The apparatus 1100 may be deployed in a device in which the translator in any one of the foregoing embodiments is located or an upstream device connected to the translator in the first network. Refer to FIG. 12. The apparatus 1100 includes:
a processing unit 1101, configured to: when time of the apparatus 1100 is not synchronized with a clock source in the first network, control a first translator to stop communicating time information with at least one other translator in the first network than the first translator, where the time information is used for obtaining time synchronized with a clock source in a second network.

Optionally, for a detailed implementation process in which the processing unit 1101 stops communicating the time information, refer to related content in step 902 in the embodiment shown in FIG. 9. Details are not described herein again.

Optionally, the apparatus 1100 further includes a first sending unit 1102, where
the first sending unit 1102 is configured to send a fault identifier to a configuration device in the first network, where the fault identifier indicates that the time of the apparatus 1100 is not synchronized with the clock source in the first network.

When the first translator includes a port in a slave state, the configuration device sets a status of a port on a second translator in the first network to the slave (slave) state, where the second translator is a translator in the first network other than the first translator.

Optionally, the apparatus 1100 further includes a first receiving unit 1103, where
the first receiving unit 1103 is configured to receive a stop command sent by the configuration device based on the fault identifier; and
the processing unit 1101 is configured to control, according to the stop command, the first translator to stop communicating the time information with the at least one other translator in the first network than the first translator.

Optionally, the processing unit 1101 is configured to control the first translator to disconnect a synchronization tunnel to the at least one other translator in the first network than the first translator, where the synchronization tunnel is used by the apparatus 1100 to receive or send a first packet, and the first packet includes the time information.

A packet type of the first packet includes one or more of an announcement Announce packet, a synchronization Sync packet, and a follow_up Follow_up packet.

Optionally, for a detailed implementation process in which the processing unit 1101 disconnects the synchronization tunnel, refer to related content in step 902 in the embodiment shown in FIG. 9. Details are not described herein again.

Optionally, the apparatus 1100 further includes a second sending unit 1104, where
the second sending unit 1104 is configured to send a control message to the first translator, where the control message indicates the first translator to disconnect a synchronization tunnel to the at least one other translator in the first network than the first translator.

Optionally, the processing unit 1101 is configured to control the first translator to stop communicating a first packet with the at least one other translator in the first network than the first translator. A packet type of the first packet includes one or more of an announcement Announce packet, a synchronization Sync packet, and a follow_up Follow_up packet.

Optionally, the apparatus 1100 further includes a third sending unit 1105, where
the third sending unit 1105 is configured to send a control message to the first translator, where the control message includes a packet type of a first packet, and the control message indicates the first translator to stop, based on the packet type, communicating the first packet with the at least one other translator in the first network than the first translator.

Optionally, the apparatus 1100 further includes a second receiving unit 1106, where
the second receiving unit 1106 is configured to receive a second packet, where the second packet is used by the apparatus 1100 to perform time synchronization with the clock source in the first network; and
the processing unit 1101 is further configured to determine, based on the second packet, whether the time of the apparatus 1100 is synchronized with the clock source in the first network.

Optionally, for a detailed implementation process in which the processing unit 1101 determines whether the time of the apparatus 1100 is synchronized with the clock source in the first network, refer to related content in step 901 in the embodiment shown in FIG. 9. Details are not described herein again.

In this embodiment of this application, because the processing unit controls the first translator to stop receiving the time information, where the time information is used by the first translator for obtaining the time synchronized with the clock source in the second network, the first translator does not send, to a device communicating with the first translator, the time synchronized with the clock source in the second network. Alternatively, the processing unit controls the first translator to stop sending the time information to the other translators, so that the other translators do not obtain, based on the time information, the time synchronized with the clock source in the second network, and do not send, to a device communicating with the other translators, the time synchronized with the clock source in the second network. The device communicating with the first translator or the device communicating with the other translators does not receive incorrect time. Further, local time of the device is not adjusted based on the incorrect time, to avoid a synchronization error.

Refer to FIG. 12. An embodiment of this application provides a time synchronization fault processing apparatus 1200. The apparatus 1200 may be deployed on the configuration device in any one of the foregoing embodiments, and the apparatus 1200 includes:
a receiving unit 1201, configured to receive a fault identifier, where the fault identifier indicates that time of a first translator in a first network is not synchronized with a clock source in the first network, or indicates that time of a control device of the first translator is not synchronized with the clock source in the first network; and
a sending unit 1202, configured to send a stop command based on the fault identifier, where the stop command indicates the first translator to stop communicating time information with at least one other translator in the first network than the first translator, and the time information is used for obtaining time synchronized with a clock source in a second network.

Optionally, the apparatus 1200 further includes:
a first processing unit 1203, further configured to: set a status of a port on a second translator in the first network to a slave (slave) state based on the fault identifier, where the second translator is a translator in the first network other than the first translator.

Optionally, for a detailed implementation process in which the processing unit 1202 sets the status of the port on the second translator, refer to related content in step 802 in the embodiment shown in FIG. 8 or step 902 in the embodiment shown in FIG. 9. Details are not described herein again.

Optionally, the apparatus 1200 further includes a second processing unit 1204, where
the receiving unit 1201 is further configured to receive a resume identifier, where the resume identifier indicates that the time of the first translator is resumed to be synchronized with the clock source in the first network, or indicates that the time of the control device of the first translator is resumed to be synchronized with the clock source in the first network; and
the second processing unit 1204 is further configured to configure a port status of a port on each translator in the first network based on the resume identifier.

In this embodiment of this application, the fault identifier indicates that the time of the first translator in the first network is not synchronized with the clock source in the first network, or indicates that the time of the control device of the first translator is not synchronized with the clock source in the first network. Therefore, the sending unit sends the stop command based on the fault identifier, and indicates, by using the stop command, the first translator to stop receiving the time information, where the time information is used for obtaining the time synchronized with the clock source in the second network, so that the first translator obtains, based on the time information, the time synchronized with the clock source in the second network, and does not send the time synchronized with the clock source in the second network to a device communicating with the first translator; or indicates, by using the stop command, the first translator to stop sending the time information to the other translators, and the other translators do not obtain, based on the time information, the time synchronized with the clock source in the second network, so that the other translators do not send the time synchronized with the clock source in the second network to a device communicating with the other translators. The device communicating with the first translator or the device communicating with the other translators do not receive incorrect time. Further, local time of the device is not adjusted based on the incorrect time, to avoid a synchronization error.

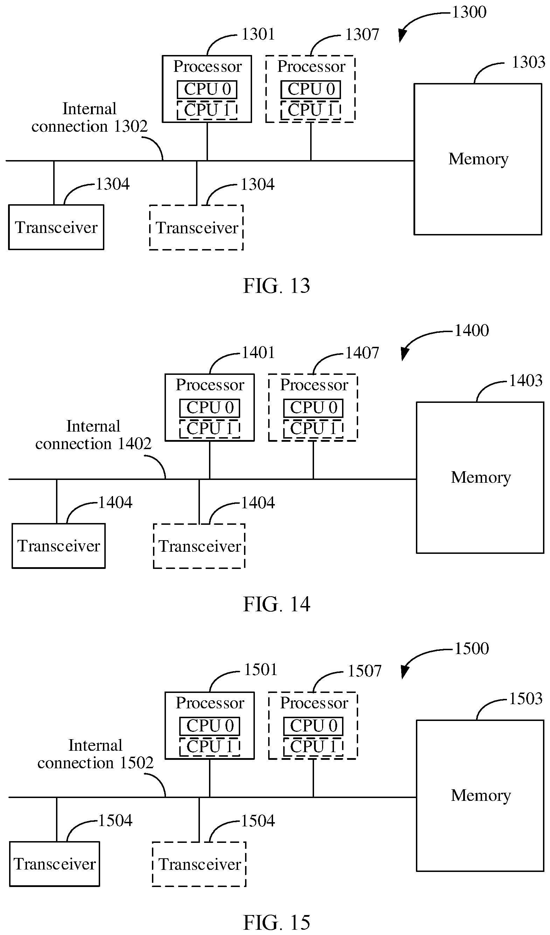

FIG. 13 is a schematic diagram of a time synchronization fault processing apparatus 1300 according to an embodiment of this application. The apparatus 1300 may be the first translator in any one of the foregoing embodiments. The apparatus 1300 includes at least one processor 1301, an internal connection 1302, a memory 1303, and at least one transceiver 1304.

The apparatus 1300 is an apparatus of a hardware structure, and may be configured to implement the functional modules in the apparatus 1000 in FIG. 10. For example, a person skilled in the art may figure out that the processing unit 1001 in the apparatus 1000 shown in FIG. 10 may be implemented by the at least processor 1301 by invoking code in the memory 1303, and the first sending unit 1002, the first receiving unit 1003, the second receiving unit 1004, and the second sending unit 1005 in the apparatus 1000 shown in FIG. 10 may be implemented by the transceiver 1304.

Optionally, the apparatus 1300 may be further configured to implement a function of the first translator in any one of the foregoing embodiments.

Optionally, the processor 1301 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The internal connection 1302 may include a path for transmitting information between the foregoing components. Optionally, the internal connection 1302 is a board, a bus, or the like.

The transceiver 1304 is configured to communicate with another device or a communication network.

The memory 1303 may be a read-only memory (read-only memory, ROM) or another type of static storage device that can store static information and instructions, or a random access memory (random access memory, RAM) or another type of dynamic storage device that can store information and instructions. The memory 1303 may alternatively be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the bus. The memory may alternatively be integrated with the processor.

The memory 1303 is configured to store application program code for performing the solutions in this application, and the processor 1301 controls the execution. The processor 1301 is configured to execute the application program code stored in the memory 1303, and cooperate with the at least one transceiver 1304, so that the apparatus 1300 implements a function in the method in this patent.

During specific implementation, in an embodiment, the processor 1301 may include one or more CPUs, for example, a CPU 0 and a CPU 1 in FIG. 13.

During specific implementation, in an embodiment, the apparatus 1300 may include a plurality of processors, for example, the processor 1301 and a processor 1307 in FIG. 13. Each of the processors may be a single-core (single-CPU) processor, or may be a multi-core (multi-CPU) processor. Herein, the processor may be one or more devices, circuits, and/or processing cores configured to process data (for example, computer program instructions).

FIG. 14 is a schematic diagram of a time synchronization fault processing apparatus 1400 according to an embodiment of this application. The apparatus 1400 may be a device in which the control device or the first translator is located in any one of the foregoing embodiments. The apparatus 1400 includes at least one processor 1401, an internal connection 1402, a memory 1403, and at least one transceiver 1404.

The apparatus 1400 is an apparatus of a hardware structure, and may be configured to implement the functional modules in the apparatus 1100 in FIG. 11. For example, a person skilled in the art may figure out that the processing unit 1101 in the apparatus 1100 shown in FIG. 11 may be implemented by the at least processor 1401 by invoking code in the memory 1403, and the first sending unit 1102, the first receiving unit 1103, the second sending unit 1104, the third sending unit 1105, and the second receiving unit 1106 in the apparatus 1100 shown in FIG. 11 may be implemented by the transceiver 1404.

Optionally, the apparatus 1400 may be further configured to implement a function of the control device of the first translator in the embodiment shown in FIG. 9.

Optionally, the processor 1401 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The internal connection 1402 may include a path for transmitting information between the foregoing components. Optionally, the internal connection 1402 is a board, a bus, or the like.

The transceiver 1404 is configured to communicate with another device or a communication network.

For example, the memory 1403 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the bus. The memory may alternatively be integrated with the processor.

The memory 1403 is configured to store application program code for performing the solutions in this application, and the processor 1401 controls the execution. The processor 1401 is configured to execute the application program code stored in the memory 1403, and cooperate with the at least one transceiver 1404, so that the apparatus 1400 implements a function in the method in this patent.

During specific implementation, in an embodiment, the processor 1401 may include one or more CPUs, for example, a CPU 0 and a CPU 1 in FIG. 14.

During specific implementation, in an embodiment, the apparatus 1400 may include a plurality of processors, for example, the processor 1401 and a processor 1407 in FIG. 14. Each of the processors may be a single-core (single-CPU) processor, or may be a multi-core (multi-CPU) processor. Herein, the processor may be one or more devices, circuits, and/or processing cores configured to process data (for example, computer program instructions).

FIG. 15 is a schematic diagram of a time synchronization fault processing apparatus 1500 according to an embodiment of this application. The apparatus 1500 may be the configuration device in any one of the foregoing embodiments. The apparatus 1500 includes at least one processor 1501, an internal connection 1502, a memory 1503, and at least one transceiver 1504.

The apparatus 1500 is an apparatus of a hardware structure, and may be configured to implement the functional modules in the apparatus 1200 in FIG. 12. For example, a person skilled in the art may figure out that the first processing unit 1203 and the second processing unit 1204 in the apparatus 1200 shown in FIG. 12 may be implemented by the at least one processor 1501 by invoking code in the memory 1503, and the receiving unit 1201 and the sending unit 1202 in the apparatus 1200 shown in FIG. 12 may be implemented by the transceiver 1504.

Optionally, the apparatus 1500 may be further configured to implement a function of the configuration device in the embodiment shown in FIG. 8 or FIG. 9.

Optionally, the processor 1501 may be a general-purpose central processing unit (central processing unit, CPU), a network processor (network processor, NP), a microprocessor, an application-specific integrated circuit (application-specific integrated circuit, ASIC), or one or more integrated circuits configured to control program execution of the solutions of this application.

The internal connection 1502 may include a path for transmitting information between the foregoing components. Optionally, the internal connection 1502 is a board, a bus, or the like.

The transceiver 1504 is configured to communicate with another device or a communication network.

The memory 1503 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be used to carry or store expected program code in a form of instructions or a data structure and that can be accessed by a computer, but is not limited thereto. The memory may exist independently, and is connected to the processor through the bus. The memory may alternatively be integrated with the processor.

The memory 1503 is configured to store application program code for performing the solutions in this application, and the processor 1501 controls the execution. The processor 1501 is configured to execute the application program code stored in the memory 1503, and cooperate with the at least one transceiver 1504, so that the apparatus 1500 implements a function in the method in this patent.

During specific implementation, in an embodiment, the processor 1501 may include one or more CPUs, for example, a CPU 0 and a CPU 1 in FIG. 15.

During specific implementation, in an embodiment, the apparatus 1500 may include a plurality of processors, for example, the processor 1501 and a processor 1507 in FIG. 15. Each of the processors may be a single-core (single-CPU) processor, or may be a multi-core (multi-CPU) processor. Herein, the processor may be one or more devices, circuits, and/or processing cores configured to process data (for example, computer program instructions).

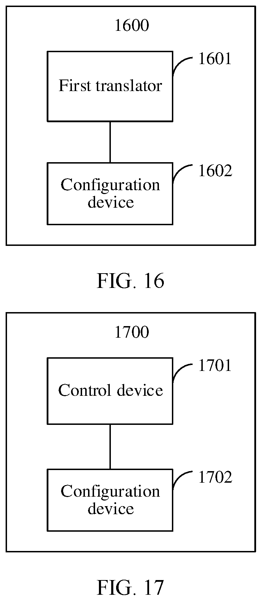

Refer to FIG. 16. An embodiment of this application provides a time synchronization fault processing system 1600. The system 1600 includes the apparatus 1000 shown in FIG. 10 and the apparatus 1200 shown in FIG. 12, or the system 1600 includes the apparatus 1300 shown in FIG. 13 and the apparatus 1500 shown in FIG. 15.

Refer to FIG. 16. The apparatus 1000 shown in FIG. 10 or the apparatus 1300 shown in FIG. 13 is a first translator 1601, and the apparatus 1200 shown in FIG. 12 or the apparatus 1500 shown in FIG. 15 is a configuration device 1602.

Refer to FIG. 17. An embodiment of this application provides a time synchronization fault processing system 1700. The system 1700 includes the apparatus 1100 shown in FIG. 11 and the apparatus 1200 shown in FIG. 12, or the system 1700 includes the apparatus 1400 shown in FIG. 14 and the apparatus 1500 shown in FIG. 15.

Refer to FIG. 17. The apparatus 1100 shown in FIG. 11 or the apparatus 1400 shown in FIG. 14 is a control device 1701 of a first translator, and the apparatus 1400 shown in FIG. 14 or the apparatus 1500 shown in FIG. 15 is a configuration device 1702.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are only optional embodiments of this application, but are not intended to limit this application. Any modification, equivalent replacement, or improvement made within the principle of this application should fall within the protection scope of this application.

## Claims

1. A time synchronization fault processing method, wherein the method comprises:
when time of a first translator in a first network is not synchronized with a clock source in the first network, stopping, by the first translator, communicating time information with at least one other translator in the first network than the first translator, wherein the time information is used for obtaining time synchronized with a clock source in a second network.

2. The method according to claim 1, wherein the method further comprises:
sending, by the first translator, a fault identifier to a configuration device in the first network, wherein the fault identifier indicates that the time of the first translator is not synchronized with the clock source in the first network.

3. The method according to claim 2, wherein the method further comprises:
receiving, by the first translator, a stop command sent by the configuration device based on the fault identifier; and
the stopping, by the first translator, communicating time information with at least one other translator in the first network than the first translator comprises:
stopping, by the first translator according to the stop command, communicating the time information with the at least one other translator in the first network than the first translator.

4. The method according to any one of claims 1 to 3, wherein the stopping, by the first translator, communicating time information with at least one other translator in the first network than the first translator comprises:
disconnecting, by the first translator, a synchronization tunnel to the at least one other translator in the first network than the first translator, wherein the synchronization tunnel is used by the first translator for receiving or sending a first packet, and the first packet comprises the time information.

5. The method according to any one of claims 1 to 3, wherein the stopping, by the first translator, communicating time information with at least one other translator in the first network than the first translator comprises:
stopping, by the first translator, communicating a first packet with the at least one other translator in the first network than the first translator, wherein the first packet comprises the time information.

6. The method according to any one of claims 1 to 5, wherein the method further comprises:
receiving, by the first translator, a second packet, wherein the second packet is used by the first translator for performing time synchronization with the clock source in the first network; and
determining, by the first translator based on the second packet, whether the time of the first translator is synchronized with the clock source in the first network.

7. The method according to claim 6, wherein the second packet comprises a clock class; and
the determining, by the first translator based on the second packet, whether the time of the first translator is synchronized with the clock source in the first network comprises:
when the clock class is lower than a first threshold, determining, by the first translator, that the time of the first translator is not synchronized with the clock source in the first network.

8. The method according to claim 6, wherein the second packet is a packet that carries time information; and
the determining, by the first translator based on the second packet, whether the time of the first translator is synchronized with the clock source in the first network comprises:
when a time deviation that is between the first translator and the clock source in the first network and that is calculated based on the second packet exceeds a second threshold, determining, by the first translator, that the time of the first translator is not synchronized with the clock source in the first network.

9. The method according to any one of claims 1 to 5, wherein the method further comprises:
when the first translator does not obtain a second packet within a timeout interval, determining, by the first translator, that the time of the first translator is not synchronized with the clock source in the first network, wherein the second packet is used by the first translator for performing time synchronization with the clock source in the first network.

10. The method according to any one of claims 1 to 9, wherein the method further comprises:
sending, by the first translator, a resume identifier to the configuration device in the first network, wherein the resume identifier indicates that the time of the first translator is resumed to be synchronized with the clock source in the first network, and the resume identifier is used by the configuration device for configuring a port status of a port on each translator in the first network.

11. The method according to any one of claims 1 to 10, wherein the second network is a time sensitive network TSN.

12. The method according to any one of claims 1 to 11, wherein the first network is a 5G network.

13. A time synchronization fault processing method, wherein the method comprises:
when time of a control device of a first translator is not synchronized with a clock source in the first network, controlling, by the control device, the first translator to stop communicating time information with at least one other translator in the first network than the first translator, wherein the time information is used for obtaining time synchronized with a clock source in a second network.

14. The method according to claim 13, wherein the method further comprises:
sending, by the control device, a fault identifier to a configuration device in the first network, wherein the fault identifier indicates that the time of the control device is not synchronized with the clock source in the first network.

15. The method according to claim 14, wherein the method further comprises:
receiving, by the control device, a stop command sent by the configuration device based on the fault identifier; and
the controlling, by the control device, the first translator to stop communicating time information with at least one other translator in the first network than the first translator comprises:
controlling, by the control device according to the stop command, the first translator to stop communicating the time information with the at least one other translator in the first network than the first translator.

16. The method according to any one of claims 13 to 15, wherein the controlling, by the control device, the first translator to stop communicating time information with at least one other translator in the first network than the first translator comprises:
controlling, by the control device, the first translator to disconnect a synchronization tunnel to the at least one other translator in the first network than the first translator, wherein the synchronization tunnel is used by the first translator for receiving or sending a first packet, and the first packet comprises the time information.

17. The method according to any one of claims 13 to 15, wherein stopping, by the first translator, communicating time information with at least one other translator in the first network than the first translator comprises:
controlling, by the control device, the first translator to stop communicating a first packet with the at least one other translator in the first network than the first translator, wherein the first packet comprises the time information.

18. The method according to any one of claims 13 to 17, wherein the method further comprises:
receiving, by the control device, a second packet, wherein the second packet is used by the control device for performing time synchronization with the clock source in the first network; and
determining, by the control device based on the second packet, whether the time of the control device is synchronized with the clock source in the first network.

19. A time synchronization fault processing method, wherein the method comprises:
receiving, by a configuration device, a fault identifier, wherein the fault identifier indicates that time of a first translator in a first network is not synchronized with a clock source in the first network, or indicates that time of a control device of the first translator is not synchronized with the clock source in the first network; and
sending, by the configuration device, a stop command based on the fault identifier, wherein the stop command indicates the first translator to stop communicating time information with at least one other translator in the first network than the first translator, and the time information is used for obtaining time synchronized with a clock source in a second network.

20. The method according to claim 19, wherein the method further comprises:
setting, by the configuration device, a status of a port on a second translator in the first network to a slave (slave) state, wherein the second translator is a translator in the first network other than the first translator.

21. The method according to claim 19 or 20, wherein the method further comprises:
receiving, by the configuration device, a resume identifier, wherein the resume identifier indicates that the time of the first translator is resumed to be synchronized with the clock source in the first network, or indicates that the time of the control device of the first translator is resumed to be synchronized with the clock source in the first network; and
configuring, by the configuration device, a port status of a port on each translator in the first network based on the resume identifier.

22. A time synchronization fault processing apparatus, wherein the apparatus comprises:
a processing unit, configured to: when time of the apparatus in a first network is not synchronized with a clock source in the first network, stop communicating time information with at least one other translator in the first network than the apparatus, wherein the time information is used for obtaining time synchronized with a clock source in a second network.

23. The apparatus according to claim 22, wherein the apparatus further comprises a first sending unit, wherein the first sending unit is configured to send a fault identifier to a configuration device in the first network, wherein the fault identifier indicates that the time of the apparatus is not synchronized with the clock source in the first network.

24. The apparatus according to claim 23, wherein the apparatus further comprises a first receiving unit, wherein
the first receiving unit is configured to receive a stop command sent by the configuration device based on the fault identifier; and
the processing unit is configured to stop, according to the stop command, communicating the time information with the at least one other translator in the first network than the apparatus.

25. The apparatus according to any one of claims 22 to 24, wherein the processing unit is configured to disconnect a synchronization tunnel to the at least one other translator in the first network than the apparatus, wherein the synchronization tunnel is used by the apparatus for receiving or sending a first packet, and the first packet comprises the time information.

26. The apparatus according to any one of claims 22 to 24, wherein the processing unit is configured to stop communicating a first packet with the at least one other translator in the first network than the apparatus, wherein the first packet comprises the time information.

27. The apparatus according to any one of claims 22 to 26, wherein the apparatus further comprises a second receiving unit, wherein
the second receiving unit is configured to receive a second packet, wherein the second packet is used by the apparatus for performing time synchronization with the clock source in the first network; and
the processing unit is further configured to determine, based on the second packet, whether the time of the apparatus is synchronized with the clock source in the first network.

28. The apparatus according to claim 27, wherein the second packet comprises a clock class; and
the processing unit is configured to: when the clock class is lower than a first threshold, determine that the time of the apparatus is not synchronized with the clock source in the first network.

29. The apparatus according to claim 27, wherein the second packet is a packet that carries time information; and
the processing unit is configured to: when a time deviation that is between the apparatus and the clock source in the first network and that is calculated based on the second packet exceeds a second threshold, determine that the time of the apparatus is not synchronized with the clock source in the first network.

30. The apparatus according to any one of claims 22 to 26, wherein the processing unit is further configured to: when the apparatus does not obtain a second packet within a timeout interval, determine that the time of the apparatus is not synchronized with the clock source in the first network, wherein the second packet is used by the apparatus for performing time synchronization with the clock source in the first network.

31. The apparatus according to any one of claims 22 to 30, wherein the apparatus further comprises a second sending unit, wherein
the second sending unit is configured to send a resume identifier to the configuration device in the first network, wherein the resume identifier indicates that the time of the apparatus is resumed to be synchronized with the clock source in the first network, and the resume identifier is used by the configuration device for configuring a port status of a port on each translator in the first network.

32. A time synchronization fault processing apparatus, wherein the apparatus comprises:
a processing unit, configured to: when time of the apparatus is not synchronized with a clock source in a first network, control a first translator to stop communicating time information with at least one other translator in the first network than the first translator, wherein the time information is used for obtaining time synchronized with a clock source in a second network.

33. The apparatus according to claim 32, wherein the apparatus further comprises a first sending unit, wherein
the first sending unit is configured to send a fault identifier to a configuration device in the first network, wherein the fault identifier indicates that the time of the apparatus is not synchronized with the clock source in the first network.

34. The apparatus according to claim 33, wherein the apparatus further comprises a first receiving unit, wherein
the first receiving unit is configured to receive a stop command sent by the configuration device based on the fault identifier; and
the processing unit is configured to control, according to the stop command, the first translator to stop communicating the time information with the at least one other translator in the first network than the first translator.

35. The apparatus according to any one of claims 32 to 34, wherein the processing unit is configured to control the first translator to disconnect a synchronization tunnel to the at least one other translator in the first network than the first translator, wherein the synchronization tunnel is used by the apparatus for receiving or sending a first packet, and the first packet comprises the time information.

36. The apparatus according to any one of claims 32 to 34, wherein the processing unit is configured to control the first translator to stop communicating a first packet with the at least one other translator in the first network than the first translator, wherein the first packet comprises the time information.

37. The apparatus according to any one of claims 32 to 36, wherein the apparatus further comprises a second receiving unit, wherein
the second receiving unit is configured to receive a second packet, wherein the second packet is used by the apparatus for performing time synchronization with the clock source in the first network; and
the processing unit is further configured to determine, based on the second packet, whether the time of the apparatus is synchronized with the clock source in the first network.

38. A time synchronization fault processing apparatus, wherein the apparatus comprises:
a receiving unit, configured to receive a fault identifier, wherein the fault identifier indicates that time of a first translator in a first network is not synchronized with a clock source in the first network, or indicates that time of a control device of the first translator is not synchronized with the clock source in the first network; and
a sending unit, configured to send a stop command based on the fault identifier, wherein the stop command indicates the first translator to stop communicating time information with at least one other translator in the first network than the first translator, and the time information is used for obtaining time synchronized with a clock source in a second network.

39. The apparatus according to claim 38, wherein the apparatus further comprises:
a first processing unit, further configured to set a status of a port on a second translator in the first network to a slave (slave) state, wherein the second translator is a translator in the first network other than the first translator.

40. The apparatus according to claim 38 or 39, wherein the apparatus further comprises a second processing unit, wherein
the receiving unit is further configured to receive a resume identifier, wherein the resume identifier indicates that the time of the first translator is resumed to be synchronized with the clock source in the first network, or indicates that the time of the control device of the first translator is resumed to be synchronized with the clock source in the first network; and
the second processing unit is configured to configure a port status of a port on each translator in the first network based on the resume identifier.

41. A time synchronization fault processing system, wherein the system comprises the apparatus according to any one of claims 22 to 37 and the apparatus according to any one of claims 38 to 40.
